# EUROPÄISCHE PATENTSCHRIFT

(11) **EP 3 131 779 B1**
(45) Veröffentlichungstag und Bekanntmachung des Hinweises auf die Patenterteilung: **09.12.2020**
(21) Anmeldenummer: 15714455.1
(22) Anmeldetag: 31.03.2015
(51) Int. Cl.: B60L 53/124, H02J 50/60, B60L 53/122, B60L 53/126

(54) **VORRICHTUNG UND VERFAHREN ZUR DETEKTION EINES STÖRKÖRPERS IN EINEM SYSTEM ZUR INDUKTIVEN ENERGIEÜBERTRAGUNG SOWIE SYSTEM ZUR INDUKTIVEN ENERGIEÜBERTRAGUNG**
APPARATUS AND METHOD FOR DETECTING AN INTERFERING BODY IN A SYSTEM FOR INDUCTIVE ENERGY TRANSMISSION AND SYSTEM FOR INDUCTIVE ENERGY TRANSMISSION
DISPOSITIF ET PROCÉDÉ DE DÉTECTION D'UN ÉLÉMENT PERTURBATEUR DANS UN SYSTÈME DE TRANSMISSION D'ÉNERGIE PAR INDUCTION AINSI QUE SYSTÈME DE TRANSMISSION D'ÉNERGIE PAR INDUCTION

(30) Priorität: 17.04.2014 DE 102014207427
(43) Veröffentlichungstag der Anmeldung: 22.02.2017
(73) Patentinhaber: Bombardier Primove GmbH, 10785 Berlin (DE)
(72) Erfinder: LUDWIG, Christoph, 78462 Konstanz (DE); STEINFORT, Adrianus Johannes, CH-8280 Kreuzlingen (CH); LUDWIG, Wolfgang, CH-8274 Tägerwilen (CH)
(74) Vertreter: Ramrath, Lukas
(86) Internationale Anmeldenummer: PCT/EP2015/056953
(87) Internationale Veröffentlichungsnummer: WO 2015/158540

(56) Entgegenhaltungen:
- WO-A1-2013/189530
- JP-A- 2012 075 200
- KR-B1- 101 383 731
- KR-B1- 101 383 731
- US-A1- 2009 295 391
- US-A1- 2012 001 493

## Beschreibung

Die Erfindung betrifft eine Vorrichtung und ein Verfahren zur Detektion eines Störkörpers in einem System zur induktiven Energieübertragung sowie ein System zur induktiven Energieübertragung.

Die induktive Energieübertragung von der Straßenseite zu einem Fahrzeug, z.B. zum Laden von Fahrzeugbatterien von elektrisch betriebenen Fahrzeugen, etabliert sich zunehmend als Alternative zum Vorsehen einer Steckerverbindung, mit welcher stationär erzeugte und herangeführte elektrische Energie dann zu einem elektrisch betriebenen Fahrzeug übertragen wird, um einen Ladebetrieb des Fahrzeug-Energiespeichers zu bewirken. Solche Systeme weisen in der Regel eine Primärspuleneinheit auf, die straßenseitig angeordnet sein kann. Z.B. kann die Primärspuleneinheit in eine Fahrbahn oder in einen auf der Fahrbahn installierten Ladeblock integriert sein. Weiter weist das System eine Sekundärspuleneinheit auf, die fahrzeugseitig angeordnet ist, insbesondere an einer Unterseite eines Fahrzeugs.

Gerade die induktive Verkopplung zwischen einer (typischerweise stationären) Primärspuleneinheit und einer fahrzeugseitigen Einheit bei der induktiven Energieübertragung erweist sich im praktischen Alltagsbetrieb als vorteilhaft und genießt eine entsprechend hohe Akzeptanz; nicht nur ein zusätzlicher Handhabungs- und Bedienungsaufwand bei einer drahtgestützten Energieübertragung, auch potentielle Übergangswiderstände und mechanische Belastungen (bis hin zu möglichem Verschleiß) sind akute bzw. potentielle Vorteile der drahtlosen, auf der induktiven Verkopplung von Spulen basierenden Übertragungstechnologie.

Aktuelle Entwicklungen weisen nach, dass über einen Pkw-Kontext hinaus, bei welchem typischerweise etwa 3 kW oder mehr induktiv übertragbar sind, bereits auch schon elektrische Leistungen der berührungslos-induktiven Energieübertragung zugänglich sind, welche 20 kW oder mehr erreichen. Damit steht die Tür auch für Lastfahrzeuge oder Fahrzeuge des öffentlichen Personennahverkehrs offen, wobei hohe Wirkungsgrade von bis zu 95% und mehr bei der Energieübertragung ergänzend akzeptanzfördernd wirken. Allerdings erfordert die berührungslos-induktive Energieübertragung im zweistelligen kW-Bereich große Spulen und entsprechend große Wirkflächen für die induktive Energieübertragung, so dass nicht nur die Herausforderung besteht, das geeignet mit einer (empfangsseitigen) Spuleneinheit versehene Fahrzeug zur induktiven Verkopplung oberhalb bzw. im elektromagnetischen Eingriff mit der (stationären) Primärspuleneinheit zu platzieren, auch ist die Primärspuleneinheit mit der ihr zugeordneten Wirkfläche vor Umwelteinflüssen, Benutzungs- und Betätigungsfehlern sowie Vandalismus zu schützen, welche den ordnungsgemäßen Leistungsübertragungsbetrieb nachteilig beeinflussen können.

Ein derartiges Problem stellt etwa das Auftreten von metallischen bzw. elektro-magnetisch leitenden Störkörpern auf oder elektromagnetisch wirksam benachbart dieser primärseitigen Wirkfläche dar. Durch die bestimmungsgemäße Aktivierung der Primärspuleneinheit würde in einem unerwünscht aufliegenden bzw. elektromagnetisch verkoppelten Störkörper durch die Induktion von Wirbelströmen Wärme erzeugt.

Diese Wärme kann sich nachteilig auf eine Betriebssicherheit des Systems zur induktiven Energieübertragung auswirken. Z.B. kann der Störkörper durch die Wärme ein unvorhersehbares Bewegungsverhalten aufweisen oder für einen Benutzer bei Berührung eine unerwünschte Hitzequelle darstellen.

Entsprechend sind bereits verschiedene Ansätze als aus dem Stand der Technik bekannt vorauszusetzen, derartige Fremdkörper, insbesondere auf der Eingriffs- bzw. Wirkfläche der Primärspuleneinheit zur Energieübertragung an das Fahrzeug, zuverlässig zu erkennen und etwa als Reaktion auf eine solche Erkennung entweder die Energieübertragung zu unterbinden oder aber zumindest ein Alarmsignal auszulösen, welches dann eine automatische oder manuelle Störkörper-Entfernung auslöst.

Ein üblicher und als bekannt vorauszusetzender Lösungsweg besteht darin, mithilfe optischer Mittel (etwa durch ansonsten bekannte Bilderfassungssysteme im sichtbaren Spektrum, alternativ etwa auch infrarot-optisch) einen relevanten Störkörper zu detektieren, dergestalt, dass durch eine geeignete Auswerteeinheit derartiger Störkörper-Detektoren ein störungsfreies Bild mit einem Störkörperzustand verglichen wird und bei entsprechender Abweichung die Detektion erfolgt. Apparative und datenmäßige Einfachheit in der Auswertung sind Vorteile eines derartigen Ansatzes, gleichzeitig eignet sich eine derartige, bildbasierte Detektortechnologie nur begrenzt für universelle Ansätze und für veränderliche Umgebungsbedingungen, da etwa eine Unterscheidung zwischen relevanten (etwa metallischen) Störkörpern einerseits und unkritischen Störkörpern oder Artefakten andererseits bei bildgebenden Verfahren nicht immer einfach ist. Exemplarisch sei etwa auf die Beaufschlagung einer Wirkfläche mit Blättern oder dergleichen Umwelteinflüssen im Außenbetrieb verwiesen, welche im Hinblick auf die induktive Energieübertragung faktisch irrelevant sind, bei bildbasierten Störkörper-Detektoren jedoch häufig zu Alarmzuständen führen würden.

Ein alternativer, ebenfalls als aus dem Stand der Technik bekannt, vorauszusetzender Ansatz zur Realisierung von Störkörper-Detektormitteln besteht darin, den Einfluss der (ausschließlich relevanten) metallischen bzw. elektromagnetisch leitenden Störkörper auf das zur induktiven Energieübertragung verwendete und damit schon vorhandene verkoppelte Feld zwischen der Primärspuleneinheit und der fahrzeugseitigen Spuleneinheit zu erfassen und als potentiellen Störzustand auszuwerten: Gegenüber einem ungestörten verkoppelten Energieübertragungsbetrieb zwischen Primärspuleneinheit und fahrzeugseitiger Spule würde nämlich ein metallischer Störkörper zu einer elektromagnetischen Feldbeeinflussung führen, welche wiederum als Signalabweichung bei einer Erfassung und Auswertung des Verkopplungszustandes detektierbar wäre.

Allerdings weist ein derartiger Ansatz auch wiederum Nachteile bzw. Verbesserungspotentiale auf: Einerseits ist ein Signal-Rauschabstand eines auf der Basis einer Detektion und Auswertung von Änderungen der beschriebenen Verkopplung gerichteten Detektion üblicherweise gering, nicht zuletzt als ein relevanter Störkörper von seinen Abmessungen her typischerweise klein gegenüber der betroffenen Wirkfläche der Primärspuleneinheit ist. Mit anderen Worten, eine derartige Detektortechnologie benötigt wirksame Mindestgrößen eines Störkörpers, um eine zuverlässige Detektion zu ermöglichen, und in diesem Zusammenhang ist dann zusätzlich und potentiell nachteilig zu berücksichtigen, dass nicht notwendigerweise jede Ausrichtung oder Position eines (eine geometrische Ausrichtung aufweisenden) Störkörpers in derselben Weise ein Detektorsignal bewirkt.

Ein zweiter Nachteil der als bekannt und potentiell gattungsbildend vorauszusetzenden Magnetfeld-Detektortechnologie zur Detektion von Störkörpern aus einer Erfassung des Verkopplungszustandes (bzw. dessen Änderung) zwischen Primärspuleneinheit und fahrzeugseitiger Spuleneinheit liegt darin, dass zum Erfassen des Störkörpers die primärseitige Spuleneinheit aktiviert sein muss, also etwa zum Bewirken des induktiven Energieübertragungsbetriebs bestromt sein muss. Dies ist jedoch im Hinblick etwa auf einen Betrieb außerhalb einer unmittelbaren Verkopplung mit dem Fahrzeug energetisch ineffizient; andererseits würde, bei einem Aktivieren der als bekannt vorauszusetzenden Detektion lediglich bei einer konkreten induktiven Eingriffsposition der Einheiten (und dort bereits befindlichem Störkörper), die elektrische Energiebeaufschlagung unmittelbar eine eigentlich zu vermeidende Fehlfunktion auslösen.

Damit erweist sich auch die Nutzung der bereits zur induktiven Energieübertragung vorhandenen Verkopplung zwischen der Primärspuleneinheit und der fahrzeugseitigen Spuleneinheit als potentiell wenig geeignet, um energetisch effizient und mit hoher Betriebssicherheit eine zuverlässige Detektion eines Störkörpers auf der Wirkfläche zu gewährleisten.

GB 1222712.0 (noch nicht veröffentlicht) offenbart ein Sicherheitssystem für ein System zur induktiven Energieübertragung zu einem Fahrzeug. Das Sicherheitssystem umfasst ein induktives Sensorsystem, welches mehrere Detektionswindungen umfasst. Weiter ist offenbart, dass das induktive Sensorsystem zumindest eine Erregerwindung umfasst. Das Sicherheitssystem dient zur Detektion von Fremdobjekten, die in der Nähe einer Primärwindungsstruktur des Systems zur induktiven Energieübertragung angeordnet sind.

Die WO2013/189530 A1 beschreibt eine Detektionsspulen-Baueinheit zum Erkennen von elektrisch leitfähigen Fremdkörpern im Bereich einer Energiesendespule, wobei die Detektionsspulen-Baueinheit mindestens eine erste Multipol -Detektionsspule mit mindestens zwei zueinander gegensinnigen Windungen umfasst.

Die DE 10 2012 205 283 A1 beschreibt eine Vorrichtung zur induktiven Leistungsübertragung, die eine Primäreinheit mit einer Primärspule und eine Sekundäreinheit mit einer Sekundärspule umfasst und bei der die Primärspule ein magnetisches Übertragungsfeld in einem Übertragungsbereich zwischen der Primäreinheit und der Sekundäreinheit induziert, und die eine gerade Anzahl von Detektorspulenelementen aufweist, die paarweise entgegengesetzt gewickelt sind und ein Detektorpaar bilden.

Die JP 2012 075 200 beschreibt eine drahtlose Energieübertragungsvorrichtung, die eine erste Spule, eine zweite Spule, eine Steuerschaltung, eine dritte Spule und eine Bestimmungsschaltung umfasst. Die Energieübertragungsvorrichtung vermeidet eine Energieübertragung, wenn ein Fremdkörper zwischen einer Sende- und Empfangsspule vorhanden ist.

Es stellt sich das technische Problem, eine Vorrichtung und ein Verfahren zur Detektion von Störkörpern in einem System zur induktiven Energieübertragung zu schaffen, die eine Detektion verbessern, insbesondere eine Detektionsgeschwindigkeit, Robustheit und eine Zuverlässigkeit der Detektion zu erhöhen. Weiter stellt sich das technische Problem, ein System zur induktiven Energieübertragung mit einer erhöhten Betriebssicherheit zu schaffen.

Dabei ist insbesondere eine verbesserte Vorrichtung zu schaffen, welche einfach in Handhabung und Auswertung ist, damit eine potentiell kostengünstige und serientaugliche Fertigung ermöglicht und zusätzlich die Gelegenheit schafft, existierende Anlagen auf einfache Weise um- oder nachzurüsten.

Die Lösung des technischen Problems ergibt sich durch die Gegenstände mit den Merkmalen der Ansprüche 1, 14 und 15. Weitere vorteilhafte Ausgestaltungen der Erfindung ergeben sich aus den Unteransprüchen.

Die vorliegende Erfindung ermöglicht die Verwendung der vorgeschlagenen Gegenstände für Automobile verschiedenster Art, eingeschlossen auch Busse und andere elektrisch betriebene Fahrzeuge, z.B. auch Schienenfahrzeuge, auch des öffentlichen Personennahverkehrs, sowie für Gütertransport- und Militärzwecke.

Vorgeschlagen wird eine Vorrichtung zur Detektion mindestens eines Störkörpers in einem System zur induktiven Energieübertragung, insbesondere zu einem Fahrzeug. Der Störkörper kann hierbei einen Fremdkörper bezeichnen, insbesondere einen metallischen und/oder elektromagnetisch leitenden Störkörper.

Das System zur induktiven Energieübertragung umfasst mindestens eine Primärspuleneinheit, die auch als Primärwindungsstruktur bezeichnet werden kann, zur Erzeugung zumindest eines Teils eines elektromagnetischen Leistungsübertragungsfelds.

Weiter kann das System zur induktiven Energieübertragung mindestens eine Sekundärspuleneinheit, die auch als Sekundärwindungsstruktur oder fahrzeugseitige Spuleneinheit bezeichnet werden kann, zum Empfang des von der Primärspuleneinheit erzeugten elektromagnetischen Felds umfassen.

Ein Leistungsübertragungsfeld kann hierbei dem von der Primärspuleneinheit erzeugten Feld oder einer Überlagerung des von der Primärspuleneinheit erzeugten Felds und eines von der Sekundärspuleneinheit erzeugten Felds, welches durch einen Strom erzeugt wird, der beim Empfang des von der Primärspuleneinheit erzeugten Felds in der Sekundärspuleneinheit induziert wird, entsprechen.

Wie nachfolgend noch näher erläutert kann der Primärspuleneinheit eine induktive Wirkfläche oder ein induktives Wirkvolumen zugeordnet sein. Die Primärspuleneinheit kann induktiv mit der Sekundärspuleneinheit verkoppelt werden.

Weiter umfasst die Vorrichtung mindestens ein Störkörper-Detektormittel, wobei das mindestens eine Störkörper-Detektormittel mindestens ein Erregerspulenmittel zur Erzeugung eines Erregerfeldes und mindestens ein Detektorspulenmittel, welches dem mindestens einen Erregerspulenmittel zugeordnet ist. Dies kann bedeuten, dass das Detektorspulenmittel derart ausgebildet und/oder angeordnet ist, dass zumindest ein Teil des Erregerfelds durch das Detektorspulenmittel empfangbar ist. Somit kann das Detektorspulenmittel in Abhängigkeit des empfangenen Erregerfelds z.B. eine Ausgangsspannung erzeugen.

Das Erregerspulenmittel kann hierbei als eine Einzelspule ausgebildet sein oder eine Mehrzahl von Einzelspulen umfassen. Ist das Erregerspulenmittel als Einzelspule ausgebildet, so umfasst die Vorrichtung bevorzugt mehrere derartige Erregerspulenmittel. Auch das Detektorspulenmittel kann hierbei als eine Einzelspule ausgebildet sein oder eine Mehrzahl von Einzelspulen umfassen. Ist das Detektorspulenmittel als Einzelspule ausgebildet, so umfasst die Vorrichtung bevorzugt mehrere derartige Detektorspulenmittel.

Die Störkörper-Detektormittel können der Primärspuleneinheit zugeordnet sein. Die Störkörper-Detektormittel dienen zum Detektieren eines metallischen und/oder elektromagnetisch leitenden Störkörpers, insbesondere auf oder feldwirksam benachbart der Wirkfläche oder in oder feldwirksam benachbart des Wirkvolumens. Auch können die Störkörper-Detektormittel der Sekundärspuleneinheit zugeordnet sein.

Die Störkörper-Detektormittel, insbesondere die Erregerspulenmittel als auch die Detektorspulenmittel sind gesondert von der Primärspuleneinheit und gesondert von der Sekundärspuleneinheit ausgebildet. Somit sind die Störkörper- Detektormittel mit Erregerspulenmittel sowie mit diesen zugeordneten Detektorspulenmittel versehen, welche gesondert und damit zusätzlich und unabhängig von der Primärspuleneinheit vorgesehen sind.

Weiter können die Erreger- und die Detektorspulenmittel unabhängig von einem Aktivierungszustand, insbesondere einem induktiven Übertragungsbetrieb, der Primärspuleneinheit und/oder der Sekundärspuleneinheit aktivier- und/oder betreibbar sein. Somit kann die mittels der Erregerspulenmittel und der Detektorspulenmittel realisierte Störkörper-Detektion unabhängig von einem induktiven Energieübertragungsbetrieb zwischen der Primärspuleneinheit und der fahrzeugseitigen Spuleneinheit aktivier- bzw. betreibbar sein. Das bedeutet, dass etwa ein (lediglich für die Störkörper- Detektorzwecke vorgesehener und damit potentiell leistungsarmer) Betrieb der Erregerspulenmittel und der zugehörigen Detektorspulenmittel dauerhaft erfolgen kann, auch außerhalb eines konkreten Energieübertragungs- (Lade-) -Betriebs der Leistungsübertragung zum Fahrzeug. Positiv führt dies dann dazu, dass eine Störkörper-Detektion zu praktisch beliebigen Zeitpunkten erfolgen kann, damit potentiell insbesondere auch, bevor überhaupt das Fahrzeug seine für die induktive Verkopplung mit der Primärspuleneinheit vorgesehene Relativposition (= Ladeposition) erreicht. Entsprechend kann mittels der Erfindung dann ein potentiell gefahren- oder störungsträchtiger Leistungs-Aktivierungszustand unterbunden werden, so dass die Betriebssicherheit des induktiven Energieübertragungsbetriebs samt vorgelagerter und nachfolgender Betriebszustände signifikant verbessert werden kann.

Weiter umfasst die Vorrichtung mindestens ein Auswertemittel zum Erfassen eines Kopplungszustands zwischen dem mindestens einen Erregerspulenmittel und dem mindestens einen Detektorspulenmittel und/oder zum Erfassen einer Änderung dieses Kopplungszustands. Z.B. kann das Auswertemittel mindestens eine Eigenschaft eines Ausgangssignals des mindestens einen Detektorspulenmittels, z.B. einer Ausgangsspannung, auswerten.

Das Fremdobjekt ist in Abhängigkeit des Kopplungszustands und/oder der Änderung des Kopplungszustands detektierbar ist. Z.B. kann das Fremdobjekt in Abhängigkeit der mindestens einen Eigenschaft des Ausgangssignals, insbesondere eines zeitlichen Verlaufs oder eine Änderung des Ausgangssignals, detektierbar sein.

Weiter umfasst die Vorrichtung mindestens ein Kompensationsmittel zum Berücksichtigen eines elektromagnetischen Einflusses der Primärspuleneinheit und/oder der Sekundärspuleneinheit auf den Kopplungszustand, insbesondere den elektromagnetischen oder induktiven Kopplungszustand, zwischen dem mindestens einen Erregerspulenmittel und dem mindestens einen Detektorspulenmittel. Berücksichtigen bedeutet hierbei Kompensieren.

Dies kann bedeuten, dass durch die Kompensationsmittel der Einfluss des vorhergehend erläuterten Leistungsübertragungsfelds auf den Kopplungszustand zwischen dem mindestens einen Erregerspulenmittel und dem mindestens einen Detektorspulenmittel bestimmbar und/oder reduzierbar, insbesondere vollständig kompensierbar oder eliminierbar, ist. Das mindestens eine Kompensationsmittel kann Teil der Störkörper-Detektormittel sein. Insbesondere kann das mindestens eine Kompensationsmittel zumindest teilweise durch das Auswertemittel bereitgestellt werden.

Durch das Kompensationsmittel ist der Anteil des Leistungsübertragungsfelds an dem von dem mindestens einen Detektorspulenmittel empfangenen Feld reduzierbar, insbesondere vollständig kompensierbar oder eliminierbar. Alternativ oder kumulativ ist durch das Kompensationsmittel der Anteil des Ausgangssignals, welches von dem mindestens einen Detektorspulenmittel in Abhängigkeit des empfangenen Leistungsübertragungsfelds erzeugt wird, reduzierbar, insbesondere vollständig kompensierbar oder eliminierbar.

Alternativ oder kumulativ kann durch das Kompensationsmittel der Anteil des Leistungsübertragungsfelds an dem von dem mindestens einen Detektorspulenmittel empfangenen Feld bestimmbar sein. Weiter alternativ oder kumulativ kann durch das Kompensationsmittel der Anteil des Ausgangssignals, welches von dem mindestens einen Detektorspulenmittel in Abhängigkeit des empfangenen Leistungsübertragungsfelds erzeugt wird, bestimmbar sein.

Dass der Anteil des Leistungsübertragungsfelds bestimmbar ist bzw. dass der Anteil des Ausgangssignals des Detektorspulenmittel, der von dem mindestens einen Detektorspulenmittel in Abhängigkeit des empfangenen Leistungsübertragungsfelds erzeugt wird, bestimmbar ist kann bedeuten, dass eine rechnerische Bestimmung des Anteils erfolgt. Insbesondere in diesem Fall kann das Kompensationsmittel das Auswertemittel umfassen oder als Auswertemittel für die rechnerische Bestimmung ausgebildet sein.

Dass der Anteil des Leistungsübertragungsfelds reduzierbar ist bzw. dass der Anteil des Ausgangssignals des Detektorspulenmittel, der von dem mindestens einen Detektorspulenmittel in Abhängigkeit des empfangenen Leistungsübertragungsfelds erzeugt wird, reduzierbar ist kann einerseits bedeuten, dass nach einer rechnerischen Bestimmung des Anteils dieser Anteil aus der entsprechenden Größe, z.B. dem Ausgangssignal des Detektorspulenmittels, herausrechenbar oder herausfilterbar ist. Alternativ kann dies bedeuten, dass der Anteil des Leistungsübertragungsfelds vor oder beim Empfang durch das Detektorspulenmittel, also vor Erzeugung eines Ausgangssignals, reduziert wird, insbesondere durch die vorhergehend erläuterte aktive Kompensation.

Es ist möglich, erste Kompensationsmittel zum Berücksichtigen eines elektromagnetischen Einflusses der Primärspuleneinheit und weitere Kompensationsmittel zum Berücksichtigen eines elektromagnetischen Einflusses der Sekundärspuleneinheit auf den Kopplungszustand zwischen dem mindestens einen Erregerspulenmittel und dem mindestens einen Detektorspulenmittel vorzusehen, wobei das erste und das weitere Kompensationsmittel unabhängig voneinander ausgebildet sind.

Die Erfindung sieht somit vor, dass für die Zwecke der Störkörper-Detektion die gesonderten Erregerspulenmittel das dann durch das Detektorspulenmittel zu erfassende Magnetfeld erzeugen, ohne dass das für die induktive (Leistungs-) Energieübertragung zwischen der Primärspuleneinheit und der Sekundärspuleneinheit erzeugte Feld hier eine Rolle spielt. Die vorliegende Erfindung sieht vorteilhaft Kompensationsmittel vor, welche einen möglichen elektromagnetischen Einfluss dieses berührungslosen Leistungsübertragungsfeldes auf die erfindungsgemäße Detektion des Kopplungszustandes (bzw. dessen Änderung) zwischen Erregerspulenmitteln und Detektorspulenmitteln kompensieren bzw. unterdrücken.

Wird ein Leistungsübertragungsfeld erzeugt, so empfängt das Detektorspulenmittel, insbesondere zusätzlich zum Erregerfeld, auch das Leistungsübertragungsfeld. Das Leistungsübertragungsfeld kann aber eine Detektion erschweren, insbesondere aufgrund einer Veränderung des Ausgangssignals des Detektorspulenmittels. Die vorgeschlagene Vorrichtung ermöglicht in vorteilhafter Weise somit eine zuverlässigere, schnellere und robustere Detektion von Störkörpern.

Erfindungsgemäß umfasst das mindestens eine Kompensationsmittel mindestens ein Kompensationsspulenmittel, wobei durch das Kompensationsspulenmittel ein Kompensationsfeld erzeugbar ist, wobei durch das Kompensationsfeld zumindest ein Teil des von dem mindestens einen Detektionsmittel empfangenen Leistungsübertragungsfeld kompensierbar ist. Vorzugsweise ist das von dem mindestens einen Detektionsmittel empfangene Leistungsübertragungsfeld durch das Kompensationsfeld vollständig kompensierbar.

Das Kompensationsspulenmittel kann hierbei als eine Einzelspule ausgebildet sein oder eine Mehrzahl von Einzelspulen umfassen. Ist das Kompensationsspulenmittel als Einzelspule ausgebildet, so umfasst die Vorrichtung bevorzugt mehrere derartige Kompensationsspulenmittel.

Kompensierbar kann bedeuten, dass das Kompensationsfeld oder zumindest ein Anteil davon dem Leistungsübertragungsfeld überlagert wird, wobei das überlagernde Kompensationsfeld eine zum überlagerten Leistungsübertragungsfeld entgegengesetzte Orientierung aufweist. Vorzugsweise weicht eine Intensität des überlagernden Kompensationsfelds nicht oder nur maximal um ein vorbestimmtes Maß von der Intensität des überlagerten Leistungsübertragungsfelds ab. Das mindestens eine Kompensationsmittel kann insbesondere als Kompensationsspuleneinheit ausgebildet sein. Die Kompensationsspuleneinheit kann insbesondere derart angeordnet und/oder ausgebildet sein, dass durch das Kompensationsfeld zumindest ein Teil des von dem mindestens einen Detektionsmittel empfangenen Leistungsübertragungsfeld kompensierbar ist. Auch das Kompensationsmittel kann unabhängig oder gesondert von der Primärspuleneinheit und der Sekundärspuleneinheit ausgebildet sein.

Z.B. können sowohl die Primärspuleneinheit derart betrieben werden, dass ein Leistungsübertragungsfeld erzeugt wird. Das mindestens eine Erregerspulenmittel kann hierbei nicht betrieben werden, so dass kein Erregerfeld (Detektionsfeld) erzeugt wird. Aufgrund des Leistungsübertragungsfelds wird das mindestens eine Detektorspulenmittel ein Ausgangssignal erzeugen. Dann kann durch das mindestens eine Kompensationsmittel ein Kompensationsfeld derart erzeugt werden, dass das Detektorspulenmittel kein Ausgangssignal mehr erzeugt bzw. das Ausgangssignal auf ein gewünschtes Maß reduziert wird.

Die Kompensation durch ein von dem Kompensationsspulenmittel erzeugten Felds kann auch als aktive Kompensation bezeichnet werden.

Alternativ oder kumulativ ist durch das Kompensationsspulenmittel zumindest ein Teil eines Leistungsübertragungsfelds erfassbar. In Abhängigkeit des erfassten Leistungsübertragungsfeld kann dann das Kompensationsspulenmittel ein Ausgangssignal erzeugen, z.B. eine Ausgangsspannung. In Abhängigkeit dieses Ausgangssignals kann dann z.B. ein Anteil des Ausgangssignals des Detektionsspulenmittels, welcher durch das Leistungsübertragungsfeld erzeugt wird, bestimmt werden. Dieser Anteil kann dann aus dem Ausgangssignal des Detektionsspulenmittels herausgerechnet werden. Hierdurch wird eine rechnerische Kompensation ermöglicht. Somit das leistungsfeldbedingte Ausgangssignal gespeichert und nachfolgend für eine rechnerische Kompensation genutzt werden.

Hierdurch ergibt sich in vorteilhafter Weise eine genaue und vollständige Kompensation des Einflusses des Leistungsübertragungsfelds auf die Detektion von Störkörpern.

In einer weiteren Ausführungsform ist zumindest ein Teil der Störkörper-Detektormittel, vorzugsweise die Gesamtheit der Störkörper-Detektormittel, insbesondere das mindestens eine Erregerspulenmittel und/oder das mindestens eine Detektorspulenmittel, auf oder an einer Wirkfläche der Primärspuleneinheit oder in einem Wirkvolumen der Primärspuleneinheit angeordnet. Auch das mindestens eine Kompensationsmittel kann auf oder an der Wirkfläche der Primärspuleneinheit oder in dem Wirkvolumen der Primärspuleneinheit angeordnet sein.

Die Wirkfläche kann hierbei eine Fläche eines Abschnitts einer Straßenoberfläche oder eines auf der Straßenoberfläche installierten Ladeblocks bezeichnen, durch den sich alle oder ein vorbestimmter Anteil, z.B. 80%, 90% oder 95%, von Feldlinien des Leistungsübertragungsfelds erstrecken. Das Wirkvolumen kann hierbei ein Volumen bezeichnen, in dem alle oder ein vorbestimmter Anteil, z.B. 80%, 90% oder 95%, der Feldlinien des Leistungsübertragungsfelds verlaufen.

Bevorzugt sind die Störkörper-Detektormittel in Form eines, bevorzugt flachen, Aufsatzes und/oder einer Auflage auf und/oder an der Wirkfläche ausgebildet. Flach kann bedeuten, dass eine Höhe der Störkörperdetektormittel in eine erste Richtung, die einer Hauptausbreitungsrichtung des Leistungsübertragungsfelds entsprechen kann, eine vorbestimmte Höhe, beispielsweise 1 cm, 2.5 cm oder 5 cm, nicht überschreitet. Die erste Richtung kann hierbei eine Vertikalrichtung sein. Vorzugsweise sind die Störkörper-Detektormittel in der ersten Richtung über der Primärspuleneinheit angeordnet, wobei die erste Richtung von der Primärspuleneinheit zu einer Sekundärspuleneinheit und somit von unten nach oben orientiert ist.

In einer alternativen Ausführungsform ist zumindest ein Teil der Störkörper-Detektormittel, vorzugsweise die Gesamtheit der Störkörper-Detektormittel, insbesondere das mindestens eine Erregerspulenmittel und/oder das mindestens eine Detektorspulenmittel, im Empfangsbereich einer Sekundärspuleneinheit angeordnet. Hierbei kann ein Feld, welches sich durch den Empfangsbereich erstreckt, durch die Sekundärspuleneinheit empfangen werden. Auch das mindestens eine Kompensationsmittel kann im Empfangsbereich der Sekundärspuleneinheit angeordnet sein.

Somit kann das Störkörper-Detektormittel mobil ausgebildet sein. Insbesondere kann das Störkörper-Detektormittel bodenseitig an der Sekundärspuleneinheit angeordnet sein, insbesondere in der ersten Richtung unterhalb der Sekundärspule. Auch in diesem Fall kann das Störkörper-Detektormittel in Form eines, bevorzugt flachen, Aufsatzes und/oder einer Auflage ausgebildet sein.

Selbstverständlich ist es auch möglich, dass zumindest ein Teil eines ersten Störkörper-Detektormittels auf oder an einer Wirkfläche der Primärspuleneinheit oder in einem Wirkvolumen der Primärspuleneinheit und zumindest ein Teil eines weiteren Störkörper-Detektormittels im Empfangsbereich einer Sekundärspuleneinheit angeordnet ist.

Insbesondere ist ein Störkörper-Detektormittel derart angeordnet, dass es bei einer vorbestimmten relativen Positionierung, insbesondere in einer nachfolgend noch näher erläuterten Ladeposition, zwischen Primärspuleneinheit und Sekundärspuleneinheit zwischen den beiden Spuleneinheiten angeordnet ist. In der vorbestimmten Positionierung weisen die Primärspuleneinheit und Sekundärspuleneinheit eine relative Lage und/oder Orientierung zueinander derart auf, dass eine gewünschte induktive Energieübertragung möglich ist.

Somit ist es möglich, erfindungsgemäß ausgestaltete Störkörper-Detektormittel sowohl an bzw. auf der Primärspuleneinheit (bzw. der zugehörigen Wirkfläche) vorzusehen, als auch die erfindungsgemäß ausgestalteten Störkörper-Detektormittel fahrzeugseitig, z.B. unterhalb der fahrzeugseitigen Spuleneinheit in Richtung auf den stationären Kopplungspartner, anzubringen, wobei jede dieser Varianten dazu führt, dass bei einer aufeinander ausgerichteten Relativposition zwischen Primärspuleneinheit und fahrzeugseitiger Spuleneinheit die Störkörper-Detektormittel zwischen diesen Spuleneinheiten angeordnet sind. Prinzipiell ist es sogar ermöglicht und von der Erfindung umfasst, erfindungsgemäße Störkörper-Detektormittel an beiden Partnern der induktiven Verkopplung vorzusehen.

Im Rahmen der Erfindung liegt es ferner, einen konkreten physischen Anbringungsort der Störkörper-Detektormittel im Hinblick auf gewünschtes Detektorverhalten zu variieren. So kann es im Rahmen zusätzlicher Weiterbildungen der Erfindung sinnvoll sein, die erfindungsgemäß ausgestalteten Störkörper-Detektormittel etwa fahrzeugseitig und in Fahrtrichtung vor den (fahrzeugseitigen) Spulenmitteln so vorzusehen, dass eine erfindungsgemäß zu bewirkende Störkörper-Detektion stattfindet, bevor durch Erreichen der aufeinander ausgerichteten Relativposition die eigentliche induktive Verkopplung für die Leistungsübertragung stattfindet. Auch auf diese Weise lässt sich die Betriebssicherheit in der Erfindungsrealisierung weiter verbessern.

In einer weiteren Ausführungsform sind das mindestens eine Erregerspulenmittel und das mindestens eine Detektorspulenmittel auf einem als Leiterplatte ausgebildeten Träger in Form von Planarinduktivitäten realisiert. Auch das als Kompensationsspulenmittel ausgebildeten Kompensationsmittel kann auf dem Träger in Form einer Planarinduktivität realisiert sein. Der Träger kann bevorzugt als gemeinsame Leiterplatte ausgebildet sind, wobei alle Spulenmittel auf oder in der Leiterplatte angeordnet sind.

Eine Planarinduktivität kann z.B. durch eine oder mehrere Leiterschleifen ausgebildet sein, die sich im Wesentlichen oder genau in einer Ebene erstrecken.

Somit ergibt sich eine fertigungstechnisch besonders einfache und leicht reproduzierbare Ausbildung des Störkörper-Detektormittels, wobei das Erregerspulenmittel sowie das Detektorspulenmittel auf einer (ansonsten als bekannt vorauszusetzenden) Leiterplatte ausgebildet sind. Zu diesem Zweck können die Spulen bzw. die zugehörigen Wicklungen geeignet als Planarwicklungen durch entsprechende Bemusterung der Leiterplatte ausgestaltet sein. Nicht zuletzt mit dem Zweck, eine bevorzugte Mehrzahl vorzusehender Einzelspulen des Detektorspulenmittels geeignet separat kontaktieren zu können und zusätzlich auch das Erregerspulenmittel, ggf. weiter zusätzliche Kompensationsspulenmittel für ein zu kompensierendes Spulenfeld der Primärspuleneinheit, zu kontaktieren und separat auswerten zu können, bietet es sich zusätzlich weiterbildend an, in der Art einer Doppel- oder Multilayer-Leiterplatte die jeweiligen Planarwicklungen auf verschiedenen Endflächen bzw. Leiterbahnschichten einer Leiterplattenanordnung vorzusehen. Ergänzend oder alternativ können komplexe Kontaktierungen auch mithilfe ansonsten bekannter Durchkontaktierungen oder dergleichen Maßnahmen erfolgen.

Somit können also verschiedene Planarwicklungen in verschiedenen Ebenen der Leiterplatte, z.B. auf einer Oberfläche oder auf inneren Leiterbahnschichten, angeordnet sein.

In einer weiteren Ausführungsform sind das mindestens eine Erregerspulenmittel und das mindestens eine Detektorspulenmittel als Planarinduktivitäten auf verschiedenen Leiterschichten und/oder auf einander gegenüberliegenden Flachseiten der gemeinsamen Leiterplatte ausgebildet.

In einer weiteren Ausführungsform ist das mindestens eine Detektorspulenmittel als Mehrzahl einander auf einer Leiterplattenfläche benachbarter Einzelspulen ausgebildet. Hierbei kann ein Detektorspulenmittel durch eine Einzelspule ausgebildet sein. Die Einzelspulen können hierbei mit einer vorbestimmten Gruppierung, insbesondere einer zweidimensionalen Gruppierung, oder einer vorbestimmten Matrixanordnung benachbart zueinander angeordnet sein. Benachbart kann bedeuten, dass sich die Einzelspulen nicht überlappen.

Alternativ oder kumulativ ist das mindestens eine Detektorspulenmittel als Mehrzahl einander zumindest teilweise überlappend angeordneter Einzelspulen ausgebildet.

Dass das mindestens eine Detektorspulenmittel als Mehrzahl von Einzelspulen ausgebildet ist, umfasst auch den Fall, dass mehrere Detektorspulenmittel, die jeweils als Einzelspule ausgebildet sind, vorgesehen sind.

Die vorteilhaft in Mehrzahl vorzusehenden Einzelspulen der Detektorspulenmittel können somit in zweidimensionaler Gruppierung bzw. in einer Matrixform vorgesehen sein. Diese erfindungsgemäße Weiterbildung, welche ergänzend oder alternativ auch ein (partielles) Überlappen einander benachbarter Einzelspulen vorsehen kann, eignet sich besonders günstig, um ein flächiges Feld in definierter Weise abzudecken bzw. elektromagnetisch zu beherrschen. Eine zweidimensionale Anordnung einer Mehrzahl der Detektorspulen, weiter bevorzugt umgeben von einer oder mehreren Erregerspulen, führt zu einem Magnetfeld der elektromagnetischen Verkopplung, welches entsprechend dem zu detektierenden Oberflächenverlauf der Wirkfläche flächig bzw. flächendeckend ist. Gleichzeitig wird ein unerwünschtes Entstehen von Störfeldern bzw. Streufeldern außerhalb der Wirkflächengeometrie in weitgehender Weise verhindert.

In einer weiteren Ausführungsform ist das mindestens eine Erregerspulenmittel als die Detektorspulenmittel zumindest abschnittsweise randseitig umschließende oder umfassende Spule, insbesondere als Einzelspule oder Leiterschlaufe, ausgebildet.

Selbstverständlich ist es auch möglich, dass die Erregerspulenmittel als Mehrzahl von Einzelspulen ausgebildet sind. Hierbei kann ein Erregerspulenmittel durch eine Einzelspule ausgebildet sein. Dass das mindestens eine Erregerspulenmittel als Mehrzahl von Einzelspulen ausgebildet ist, umfasst auch den Fall, dass mehrere Erregerspulenmittel, die jeweils als Einzelspule ausgebildet sind, vorgesehen sind.

Umschließen kann hierbei bedeuten, dass in einer gemeinsamen Projektionsebene, die parallel zu der von dem/den Erregerspulenmittel(n) umfassten Fläche orientiert sein kann, das/die Detektorspulenmittel in dem von dem/den Erregerspulenmittel(n), insbesondere in dem von der/den Einzelspulen, umfassten Bereich angeordnet sind. Es ist möglich, dass das/die Erregerspulenmittel alle Detektorspulenmittel vollständig oder nur teilweise umschließen oder umfassen.

Sind die Erregerspulenmittel durch mehrere Einzelspulen ausgebildet, z.B. aus durch Leiterschlaufen ausgebildete Einzelspulen, so können Einzelspulen benachbart zueinander angeordnet sein.

Beispielsweise kann eine Einzelspule genau eine oder genau eine vorbestimmten Anzahl von Detektorspulenmitteln, insbesondere ebenfalls als Einzelspulenmittel ausgebildete Detektorspulenmittel, umfassen. Alternativ kann eine Einzelspule nur einen vorbestimmten Anteil, beispielsweise eine Hälfte oder ein Drittel, einer oder jeder von einer vorbestimmten Anzahl von Detektorspulenmitteln umfassen.

Weiter können alle Einzelspulen einen jeweils gleichgroßen Anteil der Detektorspulenmittel umschließen (symmetrische Umschließung). Alternativ können alle oder einzelne Einzelspulen Anteile der Detektorspulenmittel mit voneinander verschiedenen Größen umfassen (unsymmetrische Umschließung).

Somit ist es möglich, dass die Erregerspulenmittel, insbesondere eine Einzelspule, kein Detektorspulenmittel vollständig umschließt oder dass die Erregerspulenmittel ausgewählte, aber nicht alle, Detektorspulenmittel vollständig umschließt.

In einer weiteren Ausführungsform ist auf oder in der Leiterplatte das mindestens eine Kompensationsspulenmittel angeordnet. Das Kompensationsspulenmittel kann hierbei als Einzelspule oder als Mehrzahl von Einzelspulen ausgebildet sein. Hierbei kann ein Kompensationsspulenmittel durch eine Einzelspule ausgebildet sein.

Insbesondere kann das Kompensationsspulenmittel separat von den Erreger- und den Detektorspulenmittel ausgebildet sein. Weiter kann das Kompensationsspulenmittel separat durch ein Auswertemittel kontaktierbar sein. Bevorzugt ist das Kompensationsspulenmittel derart angeordnet, dass der elektromagnetische Kopplungszustand zwischen dem mindestens einen Erregerspulenmittel und dem mindestens einen Detektorspulenmittel durch das Kompensationsspulenmittel unbeeinflusst ist.

In einer weiteren Ausführungsform erzeugen Erregersignalerzeugungsmittel, die mit den Erregerspulenmitteln signaltechnisch verbunden sind, ein Erregersignal mit einer oder mehreren Anregungsfrequenz(en) und/oder einem Anregungsfrequenzspektrum im Frequenzbereich von 1 kHz bis 5 MHz , insbesondere in einem Frequenzbereich von 1 kHz bis 500 kHz. Die Erregersignalerzeugungsmittel können den Erregerspulenmitteln insbesondere vorgeschaltet sein.

Eine Detektion eines Störkörpers, der auf der Wirkfläche liegt oder mit der Wirkfläche unerwünscht elektromagnetisch gekoppelt ist, kann erfolgen, indem die mit dem Detektorspulenmittel signaltechnisch verbundenen, insbesondere nachgeschalteten, Auswertemittel ein Ausgangssignal des Detektorspulenmittels auswerten. Die Auswertung kann z.B. unter Bezug auf das Erregerspulenmittel, insbesondere auf das Erregersignal, erfolgen. Beispielsweise kann in der Art eines (ansonsten als bekannt vorauszusetzenden) Differenztransformators die Feststellung erfolgen, inwieweit sich der (zu detektierende) Störkörper auf die Kopplung zwischen dem Erregerspulenmittel und dem Detektorspulenmittel auswirkt.

Im störungsfreien Idealfall können diese Spulenmittel zueinander unverkoppelt bzw. kopplungsfrei sein. Dies kann z.B. durch geeignete Ausgestaltung der physischen Geometrien und/oder die Anordnung des Erregerspulenmittels und/oder des Detektorspulenmittels auf dem Spulenträger erreicht werden.

Ergänzend oder alternativ kann dieser Zustand der störungsfreien Kopplung (bzw. Entkopplung) durch geeignete rechnerische bzw. digitale Differenzbildung der in den Auswertemitteln vorgenommenen Signalverarbeitung geschehen.

Auch kann eine Detektion darauf basieren, dass eine Änderung des Kopplungsverhaltens zwischen dem Erregerspulenmittel und dem Detektorspulenmittel durch den Störkörper erfasst und ausgewertet wird.

Durch das Vorsehen dezidierter und gesondert nur für den Zweck der Detektion vorgesehener Spulenmittel auf Sende- und/oder Empfangsseite werden nicht nur signifikante Vorteile in der Detektionsempfindlichkeit (damit betreffend detektionstaugliche Signal-Rauschabstände) ermöglicht. Es ist auch möglich, eine Detektion bzw. Auswertung einer Art, eines Typs oder einer Größe eines jeweiligen Störkörpers durchzuführen. Somit kann ein Störkörper z.B. charakterisierbar sein. Insbesondere kann/können auch z.B. eine Materialart und/oder eine Größe des Störkörpers bestimmbar sein.

Die Erfindung kann somit in vorteilhafter Weise das Anstoßen bzw. Einleiten von Reaktionsmaßnahmen in Abhängigkeit von der Art und/oder Größe eines jeweiligen Störkörpers ermöglichen.

Dies kann z.B. dadurch erfolgen, dass der signaltechnische Zusammenhang zwischen dem für das Erregerspulenmittel erzeugten Erregersignal und dem durch das Detektorspulenmittel erzeugten Ausgangssignal im Hinblick auf einen oder mehrere Signalparameter ausgewertet wird.

Insbesondere können verschiedenen Störkörper, insbesondere abhängig von Größe und/oder Lage und/oder Materialart, den signaltechnischen Zusammenhang auf einer oder auf mehreren Frequenzen oder in einem Frequenzbereich beeinflussen. Diese Frequenzabhängigkeit kann dann gezielt ausgewertet werden.

Hierbei kann eine breitbandige bzw. auf mehrere spektral unterschiedliche Frequenzen ausgerichtete Signalauswertung vorteilhaft sein. Hiermit kann auch eine wirksame Kompensation des von der Primärspuleneinheit in deren Übertragungs- bzw. Ladebetrieb erzeugten Leistungsübertragungsfelds bewirkt werden.

Insbesondere kann ein breitbandiges oder frequenzselektives Erregersignal erzeugt werden, wobei ein typisches Frequenzspektrum des Erregersignals im Bereich zwischen ca. 10 und ca. 500 kHz liegt. Insbesondere kann aber das Erregersignal keine Frequenzen in einem vorbestimmten Anregungsfrequenzbereich, der eine Frequenz des Anregungssignals der Primärspuleneinheit enthält, aufweisen. Somit ist es z.B. möglich, dass das Erregersignal nur eine oder mehrere Frequenz(en) oder einen oder mehrere Frequenzbereich(e) unterhalb einer minimalen Frequenz des Anregungsfrequenzbereichs und/oder oberhalb einer maximalen Frequenz des Anregungsfrequenzbereichs enthält. Der Anregungsfrequenzbereich kann beispielsweise die Anregungsfrequenz der Primärspuleneinheit als Mittenfrequenz enthalten und eine vorbestimmte Mindestgröße, z.B. 20 kHz, aufweisen.

Ein spektraler Bereich eines Anregungssignals der betriebenen Primärspuleneinheit, welches in Bezug auf die Detektion ein Störfeld erzeugen kann, kann z.B. im Bereich von üblicherweise ca. 140 kHz liegen, so dass sowohl durch spektrale Auswertung oberhalb als auch unterhalb eines derartigen (Stör-) Spektrums eine zuverlässige Auswertung des Ausgangssignals für eine Störkörper-Detektion ermöglicht ist, ohne dass ein (leistungsstarkes) Signal der Primärspuleneinheit eine empfindliche und hochauflösende Störkörper-Detektion erschwert.

Insoweit realisiert eine derartige breitbandig oder frequenzselektive Durchführung der Detektion durch das Kompensationsmittel ein wirksames Ausblenden eines im induktiven Energieübertragungsbetriebs vorhandenen Primärfeldes, so dass bei typischen Wirkflächengrößen im Bereich zwischen ca. 0.5 qm und 5 qm Störkörper in Münzengröße oder kleiner zuverlässig detektierbar sind.

In einer weiteren Ausführungsform wird das Erregersignal mit einer Mehrzahl von spektral voneinander beabstandeten Anregungsfrequenzen erzeugt. Hierbei können eine minimale und eine maximale Anregungsfrequenz um mindestens 100 kHz, bevorzugt um mindestens 200 kHz, weiter bevorzugt um mindestens 300 kHz, spektral voneinander beabstandet sein. Frequenzen der einzelnen Anregungssignale können wiederum mit vorbestimmten Frequenzabständen, z.B. 10 kHz, 20 kHz oder 50 kHz, voneinander beabstandet sein.

Alternativ oder kumulativ wird das Erregersignal in einem spektral mindestens 100 kHz breiten, vorzugsweise in einem spektral mindestens 200 kHz breiten, weiter bevorzugt in einem spektral mindestens 300 kHz breiten, Anregungsfrequenzbereich erzeugt.

In einer weiteren Ausführungsform sind die Auswertemittel zum Erfassen und Auswerten eines Ausgangssignals der Detektorspulenmittel so ausgebildet sind, dass das Ausgangssignal spektral über einen Frequenzbereich von mindestens 100 kHz und/oder für eine Mehrzahl von einander spektral beabstandeten Anregungsfrequenzen, z.B. für die vorhergehend erläuterten Anregungsfrequenzen, auswertbar ist. Das Ausgangssignal kann hierbei auch als Detektorsignal bezeichnet werden.

In einer weiteren Ausführungsform ist das mindestens eine Auswertemittel zum Erfassen und Auswerten einer Frequenz und/oder einer Phase und/oder einer Amplitude eines Ausgangssignals der Detektorspulenmittel ausgebildet. Insbesondere sind die Auswertemittel zum Erfassen und Auswerten einer Frequenz- und/oder Phasen- und/oder Amplitudenänderung des Ausgangssignals des Detektorspulenmittels ausgebildet. Hierbei kann die Frequenz- und/oder Phasen- und/oder Amplitudenänderung eine zeitliche Änderung sein. Bevorzugt ist die Frequenz- und/oder Phasen- und/oder Amplitudenänderung eine Änderung relativ zu einem Referenzsignal.

Das Referenzsignal kann insbesondere ein Ausgangssignal des Detektorspulenmittels sein, welches unter gleichen Erregungsbedingungen, insbesondere bei Empfang des gleichen Erregerfelds, erzeugt wird, falls kein Störkörper vorhanden ist. Alternativ kann das Referenzsignal das Erregersignal sein. Alternativ oder kumulativ kann das Referenzsignal ein Ausgangssignal eines weiteren Detektorspulenmittels sein.

Bevorzugt kann eine kombinierte Frequenz-, Phasen- und Amplitudenänderung des Detektorsignals auswertbar sein.

Somit kann das Auftreten von Amplituden, Frequenz- bzw. Phasenunterschieden, z.B. zwischen Erreger- und Ausgangssignal, als Reaktion auf einen Störkörper ausgewertet werden. Die Bestimmung von Frequenz und/oder Phase und/oder Amplitude bzw. deren Änderung ermöglicht auch einen Störkörper zusätzlich in seinen Materialeigenschaften, seiner Position bzw. Positionierung auf der Wirkfläche und seine mögliche räumliche Orientierung sowie seiner Größe zu charakterisieren.

Es hat sich z.B. herausgestellt, dass ein durch die Auswertemittel auszuwertender Phasenversatz und/oder eine Amplitudenänderung die Bestimmung einer Geometrie eines Störkörpers ermöglicht. Eine Frequenz oder Frequenzänderung, insbesondere eines Differenzsignals, ermöglicht die Bestimmung einer Eindringtiefe, wodurch wiederum Materialeigenschaften des Störkörpers bestimmt werden können.

Insbesondere kann, z.B. mit der vorhergehend beschriebenen Anordnung der Mehrzahl von Detektorspulenmittel, eine vorbestimmte Fläche, z.B. die Wirkfläche oder ein Teil der Wirkfläche oder eine die Wirkfläche vollständig enthaltende Fläche, abgedeckt werden. Auch kann eine vorbestimmte Fläche im Empfangsbereich einer Sekundärspuleneinheit abgedeckt werden, z.B. eine Empfangsfläche oder ein Teil der Empfangsfläche oder eine die Empfangsfläche vollständig enthaltende Fläche, wobei die Empfangsfläche eine Querschnittsfläche des Empfangsbereichs in einer Querschnittsebene zu vorhergehend erläuterten ersten Richtung sein kann.

Bei einer Mehrzahl von Detektorspulenmittel sind dann mehrere Ausgangssignale (entsprechend einer jeweiligen Detektor-Einzelspule) selektiv auswertbar. Das somit entstehende komplexe Signalmuster kann dann im Hinblick auf Störkörpereigenschaften auch dessen Lokalisierung auf bzw. in der Wirkfläche ausgewertet werden. Weiter können entsprechend geeignete Abhilfereaktionen ausgelöst werden, z.B. eine automatische Reinigung der Wirkfläche.

In einer weiteren Ausführungsform ist mindestens ein Kompensationsmittel vorgesehen, das zum Berücksichtigen eines elektromagnetischen Einflusses des Fahrzeugs auf den Kopplungszustand zwischen dem mindestens einen Erregerspulenmittel und dem mindestens einen Detektorspulenmittel ausgebildet sind.

Das Kompensationsmittel kann hierbei dem vorhergehend erläuterten Kompensationsmittel entsprechen oder als zusätzliches, z.B. gesondertes, Kompensationsmittel ausgebildet sein.

Bevorzugt ist das Kompensationsmittel auf oder in einer für das Erregerspulenmittel und das Detektorspulenmittel vorgesehenen Leiterplatte vorgesehen. Weiter bevorzugt ist das Kompensationsmittel zumindest teilweise durch das Auswertemittel realisiert. Durch das Kompensationsmittel zum Berücksichtigen eines elektromagnetischen Einflusses des Fahrzeugs kann der elektromagnetische Einfluss des Fahrzeugs auf den Kopplungszustand zwischen dem mindestens einen Erregerspulenmittel und dem mindestens einen Detektorspulenmittel bestimmbar und/oder reduzierbar, insbesondere vollständig kompensierbar oder eliminierbar, sein. Hierbei gelten die vorhergehenden Ausführungen zu aktiven Kompensation und zur rechnerischen Kompensation entsprechend.

Somit ermöglicht die Erfindung einerseits, einen Einfluss des Leistungsübertragungsfelds auf den Kopplungszustands zwischen dem mindestens einen Erregerspulenmittel und dem mindestens einen Detektorspulenmittel zur berücksichtigen, insbesondere zu minimieren. Dies umfasst die Berücksichtigung eines elektromagnetischen Einflusses sowohl der Primärspuleneinheit als auch der Sekundärspuleneinheit.

Dies kann z.B. durch die vorhergehend erläuterte Erzeugung eines breitbandigen und/oder frequenzselektiven Erregersignals und eine entsprechende Auswertung des Ausgangssignals erfolgen. Hierbei können die Kompensationsmittel entsprechend durch geeignete Ausgestaltung der Auswertemittel realisiert werden.

Das, insbesondere zusätzliche, Kompensationsmittel zum Berücksichtigen eines elektromagnetischen Einflusses des Fahrzeugs erlaubt in vorteilhafter Weise zusätzlich die Berücksichtigung eines elektromagnetischen Einflusses des Fahrzeugs selbst (durch die entsprechende elektromagnetisch relevante Fahrzeugmasse). Daher kann dieses auch als Fahrzeug-Kompensationsmittel bezeichnet werden.

Z.B. können zum Zweck der ergänzenden oder alternativen Kompensation des elektromagnetischen Einflusses des Fahrzeugs eine oder mehrere spezielle Zusatzspule(n) vorgesehen werden. Diese können gesondert von den vorhergehend erläuterten Kompensationsspulenmitteln ausgebildet sein. Die Zusatzspule(n) kann/können aber auch durch die/das vorhergehend erläuterte Kompensationsspulenmittel bereitgestellt werden.

Die mindestens eine Zusatz-Detektorspule kann geometrisch benachbart auf einer gemeinsamen Leiterplatte mit Spulen der Erreger- und/oder Detektorspulenmittel vorgesehen sein. Alternativ kann die mindestens eine Zusatz-Detektorspule jedoch auch auf andere Weise geometrisch, konstruktiv und/oder rechnerisch berücksichtigt werden können. Hier geben dann die Rahmenbedingungen eines jeweiligen Anwendungszwecks die Vorgabe für eine möglichst wirksame Kompensation (bzw. Kompensationserfordernisse), wobei im Rahmen der Erfindung dann nicht lediglich ausschließlich die Kompensation eines Einflusses der Primärspuleneinheit sicherzustellen ist.

Im Ergebnis gestattet es die Erfindung in überraschend einfacher und wirksamer Weise, ein System zur Störkörper-Detektion zu schaffen, welches, idealerweise in der Art eines Aufsatzes oder dergleichen Moduls zum Verbinden mit einem der Leistungspartner (d.h. Primärspuleneinheit und/oder fahrzeugseitiger Spuleneinheit) ein Höchstmaß an Flexibilität im Einsatz mit Wartungsfreundlichkeit, Austauschbarkeit und Betriebssicherheit kombiniert. Entsprechend steht zu erwarten, dass durch die erfindungsgemäße Technologie, unter Lösung der eingangs gestellten Probleme, die Einsatz- und Anwendungsspektren induktiver Energieübertragung, insbesondere auch im Leistungsbereich, sich erheblich erweitern und insoweit zusätzlicher Nutzen geschaffen wird.

Weiter vorgeschlagen wird ein System zur induktiven Energieübertragung, wobei das System mindestens eine Primärspuleneinheit zur Erzeugung zumindest eines Teils eines elektromagnetischen Leistungsübertragungsfelds und eine Sekundärspuleneinheit zum Empfang des von der Primärspuleneinheit erzeugten elektromagnetischen Feldes umfasst.

Erfindungsgemäß umfasst das System eine Vorrichtung zur Detektion eines Fremdobjekts entsprechend einer der vorhergehend erläuterten Ausführungsformen.

Weiter kann der Primärspuleneinheit eine induktive Wirkfläche und/oder ein induktives Wirkvolumen zugeordnet sein, wobei die Vorrichtung zur Detektion derart ausgebildet und/oder angeordnet ist, dass auf der Wirkfläche oder in dem Wirkvolumen angeordnetes Fremdobjekt oder ein feldwirksam zur Wirkfläche oder dem Wirkvolumen benachbart angeordnetes Fremdobjekt detektierbar ist. Die Wirkfläche und das Wirkvolumen wurden vorhergehend bereits erläutert. Insbesondere kann die vorhergehend erläuterte Leiterplatte auf der Wirkfläche oder in dem Wirkvolumen angeordnet sein. Insbesondere kann die Leiterplatte einen Teil der oder die gesamte Wirkfläche abdecken. Auch ist es möglich, dass die Leiterplatte eine Fläche abdeckt, die die Wirkfläche vollständig umfasst.

Die Sekundärspuleneinheit kann in eine Relativposition zur Wirkfläche so verbringbar sein, dass eine induktive Verkopplung zwischen der Primärspuleneinheit und der Sekundärspuleneinheit eine Leistungsübertragung bewirken kann, z.B. um eine Fahrzeug- oder Traktionsbatterie zu laden. Diese Relativposition kann auch als Ladeposition bezeichnet werden.

Hierbei kann die Leistungsübertragung abhängig von und/oder beeinflusst durch einen Betrieb der Störkörper-Detektormittel sein. Z.B. kann eine Leistungsübertragung verhindert und/oder deaktiviert werden, falls ein Störkörper detektiert wurde.

Weiter können die Störkörper- Detektormittel derart zwischen der Primärspuleneinheit und einer in der Ladeposition positionierten Sekundärspuleneinheit vorgesehen sein, dass vor dem Erreichen der Ladeposition durch das Fahrzeug und/oder in der Ladeposition die Detektion des Störkörpers, insbesondere auf der Wirkfläche, ermöglicht ist. Die Ladeposition bezeichnet hierbei eine Relativposition und/oder -orientierung, in der eine Leistungsübertragung, insbesondere mit vorbestimmten Eigenschaften, zwischen Primärspuleneinheit und Sekundärspuleneinheit möglich ist.

Weiter vorgeschlagen wird Verfahren zur Detektion mindestens eines Störkörpers in einem System zur induktiven Energieübertragung, wobei das System zur induktiven Energieübertragung mindestens eine Primärspuleneinheit zur Erzeugung zumindest eines Teils eines elektromagnetischen Leistungsübertragungsfelds umfasst, wobei durch mindestens ein Erregerspulenmittel eines Störkörper-Detektormittels ein Erregerfeld erzeugt und durch mindestens ein Detektorspulenmittel des Störkörper-Detektormittels, welches dem mindestens einen Erregerspulenmittel zugeordnet ist, zumindest teilweise empfangen wird, wobei ein Kopplungszustands zwischen dem mindestens einen Erregerspulenmittel und dem mindestens einen Detektorspulenmittel und/oder eine Änderung des Kopplungszustands erfasst wird, wobei das Fremdobjekt in Abhängigkeit des Kopplungszustands und/oder der Änderung des Kopplungszustands detektiert wird.

Weiter wird durch mindestens ein Kompensationsmittel ein elektromagnetischer Einflusses der Primärspuleneinheit und/oder Sekundärspuleneinheit auf den Kopplungszustand zwischen dem mindestens einen Erregerspulenmittel und dem mindestens einen Detektorspulenmittel berücksichtigt bzw. kompensiert, insbesondere minimiert, bevorzugt vollständig kompensiert oder eliminiert.

Das Verfahren kann hierbei bevorzugt durch eine Vorrichtung gemäß einer der vorhergehend erläuterten Ausführungsformen bzw. einer in dieser Erfindung beschriebenen Ausführungsformen durchführbar sein. Weiter sind somit auch alle Verfahren beschrieben, die mittels einer Vorrichtung gemäß einer der vorhergehenden Ausführungsformen durchführbar sind.

Insbesondere ist das mindestens eine Störkörper-Detektormittel gesondert von der Primärspuleneinheit ausgebildet. Weiter wird durch das Kompensationsmittel der Anteil des Leistungsübertragungsfelds an dem von dem mindestens einen Detektorspulenmittel empfangenen Feld reduziert. Alternativ oder kumulativ wird durch das Kompensationsmittel der Anteil des Ausgangssignals, welches von dem mindestens einen Detektorspulenmittel in Abhängigkeit des empfangenen Leistungsübertragungsfelds erzeugt wird, reduziert.

Z.B. kann durch das Kompensationsmittel das vorhergehend erläuterte Kompensationsfeld erzeugt werden. Auch kann mindestens eine Eigenschaft eines Ausgangssignals der mindestens einen Detektionsspuleneinheit ausgewertet werden, insbesondere die vorhergehend erläuterte Amplitude und/oder Frequenz und/oder Phase oder deren, ebenfalls vorhergehend beschriebenen, Änderungen.

Weiter kann/können zusätzlich eine Materialart des Fremdkörpers und/oder eine Größe des Fremdkörpers und/oder eine Lage des Fremdkörpers relativ zu dem Störkörper-Detektormittels bestimmt werden.

Weiter kann eine Leistungsübertragung verhindert und/oder deaktiviert und/oder abgeschwächt werden, falls ein Störkörper detektiert wurde.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: ein schematisches Blockschaltbild der erfindungsgemäßen Vorrichtung zur induktiven Energieübertragung mit Störkörper-Detektormitteln gemäß einer bevorzugten Ausführungsform der Erfindung;
- Fig. 2:: eine schematische Draufsicht auf ein mögliches Spulenlayout einer Trägerplatte für gemeinsam darauf vorgesehene Erreger- und Detektorspulenmittel samt zusätzlichen Kompensationsspulenmitteln und
- Fig. 3:: eine Schemaansicht zum Verdeutlichen des Einsatzes der vorliegenden Erfindung in einem exemplarischen System zum elektrischen Energietransfer zu einem Fahrzeug.

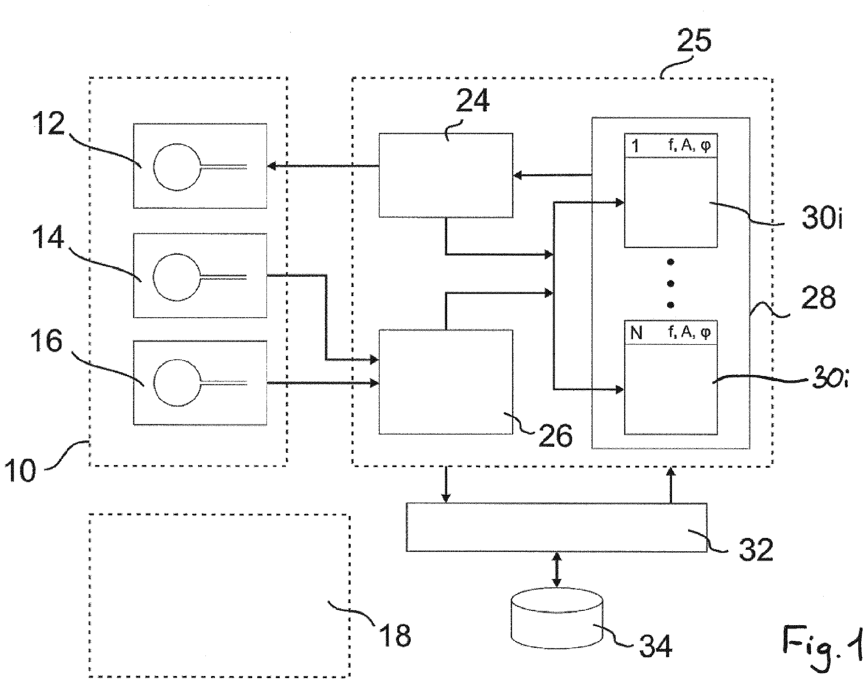

Die Fig.1 zeigt im schematischen Blockschaltbild den Aufbau und das Zusammenwirken der wesentlichen Funktionskomponenten, welche die erfindungsgemäßen Störkörper-Detektionsmittel im Rahmen der Vorrichtung zur induktiven Energieübertragung gemäß einem ersten Ausführungsbeispiel der Erfindung realisieren.

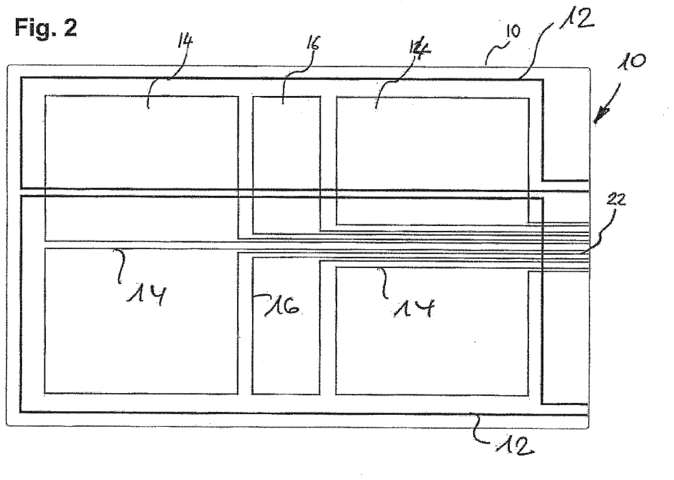

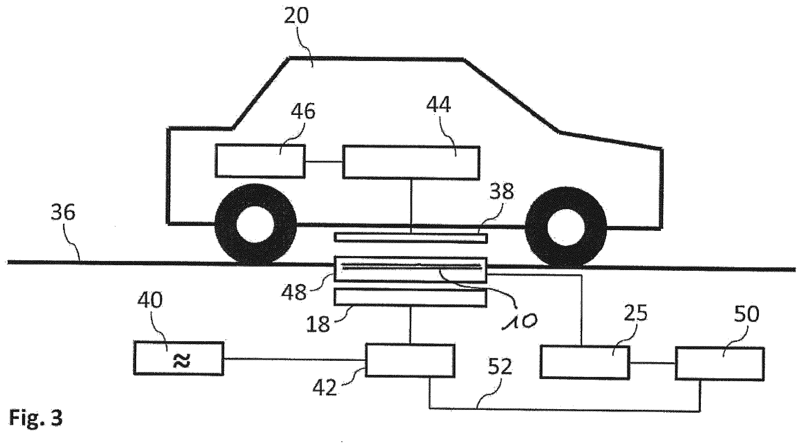

Konkret sind auf einer als Leiterplatte ausgebildeten Trägereinheit 10 die Erregerspulenmitteln 12 in Form zweier großer, umlaufender Leiterschlaufen realisiert, vgl. insoweit zum Detail die Draufsicht auf die Leiterplatte gemäß Fig. 2. Die Erregerspulenmittel 12 umschließen vier in einer 2 x 2-Matrixanordnung angeordnete Detektorspulen als Detektorspulenmittel 14. Somit sind in einer Reihe jeweils zwei Detektorspulenmittel 14 angeordnet. In einer Reihe ist zwischen dem Paar der Detektorspulenmittel 14 zusätzliche als Kompensationsspulen ausgebildete Kompensationsmittel 16 zur Kompensation eines Leistungsübertragungsfelds angeordnet. Somit ist ein Magnetfeldeinfluss einer zur Energieübertragung genutzten Primärspuleneinheit 18 oder Sekundärspuleneinheit 38 bzw. eines Einflusses elektromagnetischer Materialien eines Fahrzeugs selbst (Bezugszeichen 20 in Fig. 3) reduzierbar, vorzugsweise eliminierbar.

Hierbei ist dargestellt, dass ein erstes Erregerspulenmittel 12 jeweils nur einen Teil der Detektorspulenmittel 14 in einer ersten Reihe umfasst oder abdeckt, insbesondere ungefähr jeweils die Hälfte der Detektorspulenmittel 14 in der ersten Reihe. Ein weiteres Erregerspulenmittel 12 umfasst jeweils die verbleibenden Teile der Detektorspulenmittel 14 in der ersten Reihe sowie jeweils vollständig die Detektorspulenmittel 14 in einer weiteren Reihe bzw. deckt diese ab. Selbstverständlich sind aber auch andere Anordnungen vorstellbar.

Wie die Schemadarstellung des Leiterplattenlayouts der Fig. 2 verdeutlicht, sind zur Vermeidung von Kurzschlüssen bzw. Überschneidungen und zum Vereinfachen einer Kontaktierbarkeit jeder einzelnen Spule bzw. Spulenwicklung die Erregerspulenmittel 12 auf einer Flachseite der Leiterplatte 10 und die Detektorspulenmittel 14 bzw. Kompensationsspulenmittel 16 auf der gegenüberliegenden Seite angeordnet und entsprechend an einem randseitigen Anschlussbereich 22 kontaktierbar.

Wie das Blockschaltbild der Fig. 1 verdeutlicht, erfolgt eine Signalbeaufschlagung der Erregerspulenmittel 12 mittels einer Signalerzeugungseinheit 24, welche zum Erzeugen eines breitbandigen Erregersignals im Frequenzbereich zwischen ca. 10 kHz und ca. 500 kHz ausgebildet ist; im konkreten Ausführungsbeispiel werden, jeweils um maximale 100 kHz im Frequenzspektrum beabstandet, Einzelfrequenzsignale auf den Frequenzen 100 kHz, 120 kHz, 180 kHz, 200 kHz, 250 kHz erzeugt. Somit wird ein entsprechendes Erregerfeld erzeugt.

Empfangsseitig sind die Detektorspulenmittel 14 und die Kompensationsspulenmittel 16 mit einer im Rahmen von elektronischen Auswertemitteln 25 realisierten Signalerfassungs- und Aufbereitungseinheit 26 verbunden. Diese Funktionskomponente erfasst in ansonsten bekannter Weise ein (gleichermaßen breitbandig) in den Detektorspulenmitteln und Kompensationsmitteln 14, 16 durch das Erregerfeld induziertes Signal, wobei das induzierte Signal auch als Ausgangssignal bezeichnet werden kann. Das Ausgangssignal kann geeignet verstärkt und digitalisiert werden, um es in einer nachgeschalteten Signalverarbeitungseinheit 28 weiter zu verarbeiten. Die Signalverarbeitungseinheit 28 ist zu Analyse- und Vergleichszwecken gleichermaßen mit der Signalerzeugungseinheit 24 signaltechnisch verbunden, wobei das Erregersignal von der Signalerzeugungseinheit auch zur Signalverarbeitungseinheit 28 übertragbar ist.

In der Signalverarbeitungseinheit 28 erfolgt nunmehr ein Vergleich bzw. eine Analyse des aus der Signalerfassungs- und Aufbereitungseinheit 26 erhaltenen (typischerweise dann digital vorliegenden) Signals, und zwar im Rahmen der gezeigten bevorzugten Ausführungsform für jede der vier Detektorspuleneinheiten 14. Insoweit kann die schematisch in der Signalverarbeitungseinheit 28 gezeigte Analysefunktionalität 30i für i = 1 bis N = 4 ausgebildet sein.

In der Signalanalyse wird dabei sowohl festgestellt, ob ein Ausgangssignal einer jeweiligen der Detektorspulen 14 in Frequenz (f), Amplitude (A) und Phase (ϕ) eine Abweichung gegenüber dem Erregersignal der Signalerzeugungseinheit 24, welches als Treibersignal für die Erregerspulenmittel 12 verwendet wurde, aufweist.

Zusätzlich erfolgt ein Signalvergleich mit einem Referenzdatensatz aus einer Referenzeinheit 32, welche gespeicherte Referenzdaten einer Speichereinheit 34 aufweist. Diese Referenzdaten sind das Ergebnis eines Einrichtungs- bzw. Kalibrierungsvorgangs der Vorrichtung bei definierten Betriebsbedingungen, insbesondere einem störkörperfreien Kalibrierungs-Betriebszustand.

Die Fig. 3 verdeutlicht den Betriebs- bzw. Einsatzkontext der Erfindung. Das Fahrzeug 20, bewegbar auf einer schematisch gezeigten Fahrbahnoberfläche 36, weist im Bodenbereich und auf die Fahrbahnoberfläche gerichtet eine Sekundärspuleneinheit 38 auf, welche in ansonsten bekannter Weise zum berührungslos-induktiven Zusammenwirken mit einer stationären Primärspuleneinheit 18 ausgebildet ist. Aus einer Spannungsversorgungseinheit 40 erhaltene elektrische Energie wird in bekannter Weise mittels einer Ansteuerungs-Leistungseinheit 42 zum Einkoppeln in die primärseitige Spuleneinheit 18 aufbereitet.

In der in Fig. 3 gezeigten Ladeposition des Fahrzeugs 20 steht die Sekundärspuleneinheit 38 in einem typischen Abstand zwischen ca. 10 und 20 cm der Primärspuleneinheit 18 fluchtend gegenüber. So kann die berührungslose elektrisch-induktive Energieübertragung in ansonsten bekannter Weise bewirkt werden. Entsprechend elektromagnetisch-induktiv eingekoppelte Energie in die Sekundärspuleneinheit 38 wird wiederum durch geeignete Ladeelektronik 44 aufbereitet und der Fahrzeug-Energiespeichereinheit 46 in ansonsten bekannter Weise zu Ladezwecken zugeführt.

Die erfindungsgemäß vorgesehenen Störkörper-Detektormittel sind in Form eines Aufsatzes 48 auf die primärseitige Spuleneinheit 18 realisiert, wobei der Aufsatz 48 in der Art eines Moduls bzw. flachkastenförmig die in Fig. 2 im Detail gezeigte Trägereinheit 10 für die gezeigten Spulenanordnungen umfasst oder beinhaltet. In der gezeigten Weise kann dann der Aufsatz 48 eine Wirkfläche der Primärspuleneinheit 18 möglichst ganzflächig überdecken. Die Wirkfläche kann z.B. eine obere Oberfläche der Primärspuleneinheit 18 sein.

Der Moduleinheit 48 sind Auswertemittel 25 nachgeschaltet (siehe insoweit zu Details die Fig. 1), wobei die Auswertemittel 25 in der gezeigten Weise sowohl die Signalerzeugungseinheit 24 für die Erregerspulenmittel 12 als auch die detektorseitige Signalaufbereitung und -verarbeitung durchführen.

Den Auswertemitteln 25 ist eine Reaktions- bzw. Alarmeinheit 50 nachgeschaltet, welche als Reaktion auf ein Detektionssignal der Auswertemittel 25 (nämlich dass in zu detektierender Weise ein Störkörper auf dem Aufsatz 48 liegt), eine technische Reaktion auslöst, bzw. veranlasst, etwa durch eine geeignete Signal- oder Alarmgabe, ergänzend oder alternativ durch das Auslösen geeigneter Entfernungs- bzw. Reinigungsmaßnahmen. Eine schematisch gezeigte Verbindung 52 zur Leistungs-Ansteuereinheit 42 kann zudem bewirken, dass bei Detektion des Störkörpers ein (weiterer) elektrischer Leistungseintrag in die primärseitige Spuleneinheit 18 unterbunden wird, so dass insoweit dann Gefährdungen wirksam vermieden werden können.

Der Betrieb der anhand der Figuren 1 und 2 beschriebenen und im Kontext der Fig. 3 dargestellten Vorrichtung ist wie folgt:
Das über die induktive Verkoppelung der Einheiten 18, 38 mit Ladestrom für die Batterieeinheit 46 zu versorgende Fahrzeug 20 wird in die in Fig. 3 gezeigte Ladeposition oberhalb der Primärspuleneinheit 18 gebracht. Bereits vor diesem Verbringen erfolgt durch (idealerweise permanenten) Betrieb der Störkörper-Detektionsmittel 48, 25, 50 eine Überwachung darauf, ob auf dem Aufsatz 48 und insoweit auch oberhalb der Wirkfläche ein elektromagnetisch relevanter bzw. potenziell gefahrenträchtiger Störkörper vorhanden ist.

Technisch geschieht dies im Betrieb der Einheiten 10, 25 dadurch, dass eine zwischen den Spulenmitteln 12, 14 im Ansteuerzustand durch die Signalerzeugungseinheit 24 bewirkte elektromagnetische Kopplung auf Veränderungen des kopplungsrelevanten Ausgangssignal mittels der auswerteseitigen Einheiten 26, 28, 30i überprüft wird.

Konkret kann im vorliegenden Fall ein Abgleich der detektorseitigen Signale sowohl im Hinblick auf eine Änderung der Frequenz, der Amplitude und der Phase gegenüber dem Erregersignal als auch relativ zu einem gespeicherten Referenzsignal stattfinden. Beim Überschreiten eines geeigneten Schwellwertes, welches insoweit dann einen Störkörperzustand beschreibt, würden mittels der Einheit 50 ein entsprechender Stör- bzw. Alarmzustand signalisiert und weitergehende Maßnahmen ausgelöst.

Die vorliegende Erfindung ist nicht auf das gezeigte Ausführungsbeispiel beschränkt. Vielmehr ist sowohl die Ausgestaltung der exemplarisch beschriebenen Trägereinheit 10 mit den jeweiligen Detektor-Spulenmitteln ebenso variabel und frei an beliebige Einsatzumgebungen anpassbar, wie eine Anzahl und eine Anordnung jeweils vorzusehender Einzelspulen sowie deren Auswertung und Anordnung auf der primärseitigen Spuleneinheit.

So ist es gleichermaßen im Rahmen alternativer Realisierungen der Erfindung möglich, die exemplarisch als vollflächig die Primärspuleneinheit 18 überdeckende Spulenträgereinheit lediglich teilflächig auszugestalten, alternativ auch diese Spulenträgereinheit fahrzeugseitig anzuordnen, insbesondere bodenseitig die Sekundärspuleneinheit 38 ganz- oder teilflächig überdeckend.

Wiederum alternativ kann die Spulenträgereinheit auch, z.B. in Fahrtrichtung, vor der Sekundärspuleneinheit 38 vorgesehen sein, um insoweit bereits eine Detektion vorzunehmen, bevor überhaupt ein elektromagnetisch relevanter Verkopplungs- und Eingriffszustand für die Leistungsübertragung stattfindet.

Auch existieren weitere Möglichkeiten auf der Auswertungsseite, die Erfindung weiterzubilden bzw. zu variieren. So hat es sich etwa im Rahmen der Erfindung weiterbildend als vorteilhaft herausgestellt, dass die gemessenen bzw. abgeglichenen Signalparameter, eingeschlossen eine Variation von Frequenz, Amplitude und/oder Phase, der durch den Störkörper veranlassten Signaländerung charakteristisch für die Art bzw. das Material, die Größe, die Position und dgl. Eigenschaften des Störkörpers sind.

Entsprechend liegt es im Rahmen von (in den Figuren nicht gezeigten) Weiterbildungen der Erfindung, in Auswertemitteln bzw. den Signalanalysemitteln 30i geeignete Störkörper-Charakterisierungsmittel zuzuordnen bzw. nachzuschalten, welche auf der Basis der detektierten Signaländerungen eine Charakterisierung des Störkörpers vornehmen und auf der Basis dieser Charakterisierung (beispielsweise also etwa der Feststellung, beim Störkörper handelt es sich um einen folienförmigen Störkörper) eine geeignete Entfernungsmaßnahme spezifisch auszulösen.

Im Ergebnis erreicht die vorliegende Erfindung in überraschend einfacher und eleganter Weise, dass sich die Betriebssicherheit gerade auch im technischen Gebiet der Hochleistungs-Energieübertragung zwischen induktiv verkoppelten Spulenpartner signifikant erhöhen lässt; dabei gestattet die vorliegende Erfindung nicht nur das leichte und herstellungstechnisch günstige Realisieren und Nachrüsten bestehender Systeme, auch erreicht die vorliegende Erfindung eine deutliche Effizienzverbesserung im Hinblick auf elektrischen Energieverbrauch, da nunmehr und in Abkehr vom als gattungsbildend vorausgesetzten Stand der Technik eine kontinuierliche Überwachung auf Störkörper bei geringem elektrischen Leistungseinsatz (nämlich lediglich für die Störkörper-Detektionsmittel und die hierfür separat vorgesehenen Einheiten) erfolgen kann, ohne dass etwa die Leistungs-Spuleneinheiten bestromt sein müssen.

## Patentansprüche

1. Vorrichtung zur Detektion mindestens eines Störkörpers in einem System zur induktiven Energieübertragung, wobei das System zur induktiven Energieübertragung mindestens eine Primärspuleneinheit (18) zur Erzeugung zumindest eines Teils eines elektromagnetischen Leistungsübertragungsfelds umfasst, wobei die Vorrichtung mindestens ein Störkörper-Detektormittel (48, 25, 50) umfasst, wobei das mindestens eine Störkörper-Detektormittel (48, 25, 50) mindestens ein Erregerspulenmittel (12) zur Erzeugung eines Erregerfeldes und mindestens ein Detektorspulenmittel (14), welches dem mindestens einen Erregerspulenmittel (12) zugeordnet ist, umfasst, wobei die Vorrichtung mindestens ein Auswertemittel (25) zum Erfassen eines Kopplungszustands zwischen dem mindestens einen Erregerspulenmittel (12) und dem mindestens einen Detektorspulenmittel (14) und/oder zum Erfassen einer Änderung des Kopplungszustands umfasst, wobei der Störkörper in Abhängigkeit des Kopplungszustands und/oder der Änderung des Kopplungszustands detektierbar ist, wobei die Vorrichtung mindestens ein Kompensationsmittel (16) zum Kompensieren eines elektromagnetischen Einflusses der Primärspuleneinheit (18) und/oder einer Sekundärspuleneinheit (38) auf den Kopplungszustand zwischen dem mindestens einen Erregerspulenmittel (12) und dem mindestens einen Detektorspulenmittel (14) umfasst, wobei das mindestens eine Störkörper-Detektormittel (48, 25, 50) gesondert von der Primärspuleneinheit (18) ausgebildet ist, wobei durch das Kompensationsmittel (16) der Anteil des Leistungsübertragungsfelds an dem von dem mindestens einen Detektorspulenmittel (14) empfangenen Feld reduziert wird und/oder durch das Kompensationsmittel (16) der Anteil des Ausgangssignals, welches von dem mindestens einen Detektorspulenmittel (14) in Abhängigkeit des empfangenen Leistungsübertragungsfelds erzeugt wird, reduziert wird, **dadurch gekennzeichnet, dass**
das mindestens eine Kompensationsmittel (16) mindestens ein Kompensationsspulenmittel umfasst, wobei durch das Kompensationsspulenmittel ein Kompensationsfeld erzeugt wird, wobei durch das Kompensationsfeld zumindest ein Teil des von dem mindestens einen Detektionsmittel (14) empfangenen Leistungsübertragungsfeld kompensiert wird, und/oder wobei durch das Kompensationsspulenmittel zumindest ein Teil des Leistungsübertragungsfelds erfasst wird.

2. Vorrichtung nach Anspruch 1, **dadurch gekennzeichnet, dass** zumindest ein Teil der Störkörper-Detektormittel (48, 25, 50) auf oder an einer Wirkfläche der Primärspuleneinheit (18) und/oder in einem Wirkvolumen der Primärspuleneinheit (18) angeordnet sind.

3. Vorrichtung nach Anspruch 1, **dadurch gekennzeichnet, dass** zumindest ein Teil der Störkörper-Detektormittel (48, 25, 50) im Empfangsbereich der Sekundärspuleneinheit (38) angeordnet sind.

4. Vorrichtung nach einem der Ansprüche 1 bis 3, **dadurch gekennzeichnet, dass** das mindestens eine Erregerspulenmittel (12) und das mindestens eine Detektorspulenmittel (14) auf einem als Leiterplatte (10) ausgebildeten Träger in Form von Planarinduktivitäten realisiert sind.

5. Vorrichtung nach Anspruch 4, **dadurch gekennzeichnet, dass** das mindestens eine Erregerspulenmittel (12) und das mindestens eine Detektorspulenmittel (14) als Planarinduktivitäten auf verschiedenen Leiterschichten und/oder auf einander gegenüberliegenden Flachseiten der gemeinsamen Leiterplatte (10) ausgebildet sind.

6. Vorrichtung nach Anspruch 4 oder 5, **dadurch gekennzeichnet, dass** das mindestens eine Detektorspulenmittel (14) als Mehrzahl einander auf einer Leiterplattenfläche benachbarter Einzelspulen ausgebildet ist und/oder als Mehrzahl einander zumindest teilweise überlappend angeordneter Einzelspulen ausgebildet ist.

7. Vorrichtung nach einem der Ansprüche 4 bis 6, **dadurch gekennzeichnet, dass** auf oder in der Leiterplatte (10) mindestens ein Kompensationsspulenmittel (16) angeordnet ist.

8. Vorrichtung nach einem der Ansprüche 1 bis 7, **dadurch gekennzeichnet, dass** das mindestens eine Erregerspulenmittel (12) als die Detektorspulenmittel (14) zumindest abschnittsweise randseitig umschließende Spule ausgebildet ist.

9. Vorrichtung nach einem der Ansprüche 1 bis 8, **dadurch gekennzeichnet, dass** mit dem mindestens einen Erregerspulenmittel (12) signaltechnisch verbundene Erregersignalerzeugungsmittel ein Erregersignal mit einer oder mehreren Anregungsfrequenz(en) und/oder einem Anregungsfrequenzspektrum im Frequenzbereich von 1 kHz bis 5 MHz erzeugen.

10. Vorrichtung nach Anspruch 9, **dadurch gekennzeichnet, dass** das Erregersignal mit einer Mehrzahl spektral voneinander beabstandeten Anregungsfrequenzen und/oder in einem spektral mindestens 100 kHz breiten Anregungsfrequenzbereich erzeugt wird.

11. Vorrichtung nach einem der Ansprüche 1 bis 10, **dadurch gekennzeichnet, dass** das mindestens eine Auswertemittel (25) zum Erfassen und Auswerten eines Ausgangssignals der Detektorspulenmittel (14) so ausgebildet ist, dass das Ausgangssignal spektral über einen Frequenzbereich von mindestens 100 kHz und/oder für eine Mehrzahl von einander spektral beabstandeten Trägerfrequenzen ausgewertet wird.

12. Vorrichtung nach einem der Ansprüche 1 bis 11, **dadurch gekennzeichnet, dass** das mindestens eine Auswertemittel (25) zum Erfassen und Auswerten einer Frequenz und/oder Phasen und/oder Amplitude eines Ausgangssignals der Detektorspulenmittel (14) ausgebildet ist.

13. Vorrichtung nach einem der Ansprüche 1 bis 12, **gekennzeichnet durch** Kompensationsmittel (16), die zum Kompensieren eines elektromagnetischen Einflusses des Fahrzeugs auf den Kopplungszustand zwischen dem mindestens einen Erregerspulenmittel (12) und dem mindestens einen Detektorspulenmittel (14) ausgebildet sind.

14. System zur induktiven Energieübertragung, wobei das System mindestens eine Primärspuleneinheit (18) zur Erzeugung zumindest eines Teils eines elektromagnetischen Leistungsübertragungsfelds und eine Sekundärspuleneinheit (38) zum Empfang des von der Primärspuleneinheit erzeugten elektromagnetischen Feldes umfasst,
**dadurch gekennzeichnet, dass**
das System eine Vorrichtung zur Detektion eines Störkörpers nach einem der Ansprüche 1 bis 13 umfasst.

15. Verfahren zur Detektion mindestens eines Störkörpers in einem System zur induktiven Energieübertragung, wobei das System zur induktiven Energieübertragung mindestens eine Primärspuleneinheit (18) zur Erzeugung zumindest eines Teils eines elektromagnetischen Leistungsübertragungsfelds umfasst, wobei durch mindestens ein Erregerspulenmittel (12) eines Störkörper-Detektormittels (48, 25, 50) ein Erregerfeld erzeugt und durch mindestens ein Detektorspulenmittel (14) des Störkörper-Detektormittels (48, 25, 50), welches dem mindestens einen Erregerspulenmittel (12) zugeordnet ist, zumindest teilweise empfangen wird, wobei ein Kopplungszustands zwischen dem mindestens einen Erregerspulenmittel (12) und dem mindestens einen Detektorspulenmittel (14) und/oder eine Änderung des Kopplungszustands erfasst wird, wobei der Störkörper in Abhängigkeit des Kopplungszustands und/oder der Änderung des Kopplungszustands detektiert wird, wobei durch mindestens ein Kompensationsmittel (16) ein elektromagnetischer Einflusses der Primärspuleneinheit (18) und/oder einer Sekundärspuleneinheit (38) auf den Kopplungszustand zwischen dem mindestens einen Erregerspulenmittel (12) und dem mindestens einen Detektorspulenmittel (14) kompensiert wird, wobei das mindestens eine Störkörper-Detektormittel (48, 25, 50) gesondert von der Primärspuleneinheit (18) ausgebildet ist, wobei durch das Kompensationsmittel (16) der Anteil des Leistungsübertragungsfelds an dem von dem mindestens einen Detektorspulenmittel (14) empfangenen Feld reduziert wird und/oder durch das Kompensationsmittel (16) der Anteil des Ausgangssignals, welches von dem mindestens einen Detektorspulenmittel (16) in Abhängigkeit des empfangenen Leistungsübertragungsfelds erzeugt wird, reduziert wird,
**dadurch gekennzeichnet, dass**
das mindestens eine Kompensationsmittel (16) mindestens ein Kompensationsspulenmittel umfasst, wobei durch das Kompensationsspulenmittel ein Kompensationsfeld erzeugt wird, wobei durch das Kompensationsfeld zumindest ein Teil des von dem mindestens einen Detektionsmittel (14) empfangenen Leistungsübertragungsfeld kompensiert wird, und/oder wobei durch das Kompensationsspulenmittel zumindest ein Teil des Leistungsübertragungsfelds erfasst wird

## Claims

1. A device for detecting at least one interfering body in a system for the inductive transfer of energy, the system for the inductive transfer of energy comprising at least one primary coil unit (18) for generating at least a part of an electromagnetic power transfer field, the device comprising at least one interfering body detector means (48, 25, 50), the at least one interfering body detector means (48, 25, 50) comprising at least one exciter coil means (12) for generating an exciter field and at least one detector coil means (14) which is associated with the at least one exciter coil means (12), the device comprising at least one evaluation means (25) for detecting a coupling state between the at least one exciter coil means (12) and the at least one detector coil means (14) and/or for detecting a change of the coupling state, the interfering body being detectable depending on the coupling state and/or the change of the coupling state, the device comprising at least one compensation means (16) for compensating an electromagnetic influence of the primary coil unit (18) and/or of a secondary coil unit (38) on the coupling state between the at least one exciter coil means (12) and the at least one detector coil means (14), the at least one interfering body detector means (48, 25, 50) being formed separately from the primary coil unit (18), the portion of the power transfer field in the field received by the at least one detector coil means (14) being reduced by the compensation means (16) and/or the portion of the output signal which is generated by the at least one detector coil means (14) depending on the received power transfer field being reduced by the compensation means (16),
**characterised in that**
the at least one compensation means (16) comprises at least one compensation coil means, wherein a compensation field is generated by the compensation coil means, at least a part of the power transfer field received by the at least one detection means (14) being compensated by the compensation field, and/or wherein at least a part of the power transfer field being detected by the compensation coil means.

2. The device according to claim 1, **characterised in that** at least a part of the interfering body detector means (48, 25, 50) is arranged on or against an active surface of the primary coil unit (18) and/or in an active volume of the primary coil unit (18).

3. The device according to claim 1, **characterised in that** at least a part of the interfering body detector means (48, 25, 50) is arranged in the receiving range of the secondary coil unit (38).

4. The device according to one of claims 1 to 3, **characterised in that** the at least one exciter coil means (12) and the at least one detector coil means (14) are realised in the form of planar inductors on a carrier designed as a circuit board (10) .

5. The device according to claim 4, **characterised in that** the at least one exciter coil means (12) and the at least one detector coil means (14) are designed as planar inductors on different conductor layers and/or on mutually opposed flat sides of the common circuit board (10).

6. The device according to claim 4 or 5, **characterised in that** the at least one detector coil means (14) is designed as a plurality of individual coils adjacent to each other on a circuit board surface and/or is designed as a plurality of individual coils arranged at least partially overlapping each other.

7. The device according to one of claims 4 to 6, **characterised in that** at least one compensation coil means (16) is arranged on or in the circuit board (10).

8. The device according to one of claims 1 to 7, **characterised in that** the at least one exciter coil means (12) is designed as a coil surrounding the detector coil means (14) at least in sections at the edge.

9. The device according to one of claims 1 to 8, **characterised in that** an exciter signal with one or more excitation frequencies and/or an excitation frequency spectrum in the frequency range of 1 kHz to 5 MHz is generated by exciter signal generation means connected to the at least one exciter coil means (12) by signalling technology.

10. The device according to claim 9, **characterised in that** the exciter signal is generated with a plurality of excitation frequencies spectrally separated from each other and/or in an excitation frequency range which is spectrally at least 100 kHz wide.

11. The device according to one of claims 1 to 10, **characterised in that** the at least one evaluation means (25) for detecting and evaluating an output signal of the detector coil means (14) is designed in such a manner that the output signal is evaluated spectrally over a frequency range of at least 100 kHz and/or for a plurality of carrier frequencies which are spectrally distanced from each other.

12. The device according to one of claims 1 to 11, **characterised in that** the at least one evaluation means (25) is designed for detecting and evaluating a frequency and/or phases and/or amplitude of an output signal of the detector coil means (14).

13. The device according to one of claims 1 to 12, **characterised by** compensation means (16) which are designed to compensate an electromagnetic influence of the vehicle on the coupling state between the at least one exciter coil means (12) and the at least one detector coil means (14).

14. A system for the inductive transfer of energy, the system comprising at least one primary coil unit (18) for generating at least a part of an electromagnetic power transfer field and a secondary coil unit (38) for receiving the electromagnetic field generated by the primary coil unit,
**characterised in that**
the system comprises a device for detecting an interfering body according to one of claims 1 to 13.

15. A method for detecting at least one interfering body in a system for the inductive transfer of energy, the system for the inductive transfer of energy comprising at least one primary coil unit (18) for generating at least a part of an electromagnetic power transfer field, an exciter field being generated by at least one exciter coil means (12) of an interfering body detector means (48, 25, 50) and being at least partially received by at least one detector coil means (14) of the interfering body detector means (48, 25, 50) which is associated with the at least one exciter coil means (12), a coupling state between the at least one exciter coil means (12) and the at least one detector coil means (14) and/or a change of the coupling state being detected, the interfering body being detected depending on the coupling state and/or the change of the coupling state, an electromagnetic influence of the primary coil unit (18) and/or of a secondary coil unit (38) on the coupling state between the at least one exciter coil means (12) and the at least one detector coil means (14) being compensated by at least one compensation means (16), the at least one interfering body detector means (48, 25, 50) being formed separately from the primary coil unit (18), the portion of the power transfer field in the field received by the at least one detector coil means (14) being reduced by the compensation means (16) and/or the portion of the output signal which is generated by the at least one detector coil means (16) depending on the received power transfer field being reduced by the compensation means (16),
**characterised in that**
the at least one compensation means (16) comprises at least one compensation coil means, wherein a compensation field is generated by the compensation coil means, at least a part of the power transfer field received by the at least one detection means (14) being compensated by the compensation field, and/or wherein at least a part of the power transfer field being detected by the compensation coil means.

## Revendications

1. Dispositif de détection d'au moins un élément perturbateur dans un système de transmission d'énergie par induction, dans lequel le système de transmission d'énergie par induction comprend au moins une unité de bobine primaire (18) pour générer au moins une partie d'un champ de transmission de puissance électromagnétique, dans lequel le dispositif comprend au moins un moyen détecteur d'élément perturbateur (48, 25, 50), dans lequel l'au moins un moyen détecteur d'élément perturbateur (48, 25, 50) comprend au moins un moyen de bobine d'excitation (12) pour générer un champ d'excitation et au moins un moyen de bobine de détection (14), lequel est associé à l'au moins un moyen de bobine d'excitation (12), dans lequel le dispositif comprend au moins un moyen d'évaluation (25) pour détecter un état de couplage entre l'au moins un moyen de bobine d'excitation (12) et l'au moins un moyen de bobine de détection (14) et/ou pour détecter un changement de l'état de couplage, dans lequel l'élément perturbateur peut être détecté en fonction de l'état de couplage et/ou du changement de l'état de couplage, dans lequel le dispositif comprend au moins un moyen de compensation (16) pour compenser une influence électromagnétique de l'unité de bobine primaire (18) et/ou d'une unité de bobine secondaire (38) sur l'état de couplage entre l'au moins un moyen de bobine d'excitation (12) et l'au moins un moyen de bobine de détection (14), dans lequel l'au moins un moyen détecteur d'élément perturbateur (48, 25, 50) est réalisé de manière séparée de l'unité de bobine primaire (18), dans lequel la proportion du champ de transmission de puissance sur le champ reçu par l'au moins un moyen de bobine de détection (14) est réduite par le moyen de compensation (16) et/ou la proportion du signal de sortie, qui est généré par l'au moins un moyen de bobine de détection (14) en fonction du champ de transmission de puissance reçu, est réduite par le moyen de compensation (16),
**caractérisé en ce que**
l'au moins un moyen de compensation (16) comprend au moins un moyen de bobine de compensation, dans lequel un champ de compensation est généré par le moyen de bobine de compensation, dans lequel au moins une partie du champ de transmission de puissance reçu par l'au moins un moyen de détection (14) est compensée par le champ de compensation et/ou dans lequel au moins une partie du champ de transmission de puissance est détectée par le moyen de bobine de compensation.

2. Dispositif selon la revendication 1, **caractérisé en ce qu'**au moins une partie des moyens détecteurs d'élément perturbateur (48, 25, 50) sont disposés sur ou au niveau d'une surface active de l'unité de bobine primaire (18) et/ou dans un volume actif de l'unité de bobine primaire (18) .

3. Dispositif selon la revendication 1, **caractérisé en ce qu'**au moins une partie des moyens détecteurs d'élément perturbateur (48, 25, 50) sont disposés dans la zone de réception de l'unité de bobine secondaire (38).

4. Dispositif selon l'une quelconque des revendications 1 à 3, **caractérisé en ce que** l'au moins un moyen de bobine d'excitation (12) et l'au moins un moyen de bobine de détection (14) sont réalisés sur un support, réalisé en tant que carte de circuits imprimés (10), sous la forme d'inductances planaires.

5. Dispositif selon la revendication 4, **caractérisé en ce que** l'au moins un moyen de bobine d'excitation (12) et l'au moins un moyen de bobine de détection (14) sont réalisés en tant qu'inductances planaires sur différentes couches conductrices et/ou sur des côtés plats se faisant face les uns les autres de la carte de circuits imprimés (10) commune.

6. Dispositif selon la revendication 4 ou 5, **caractérisé en ce que** l'au moins un moyen de bobine de détection (14) est réalisé en tant que multitude de bobines individuelles adjacentes les unes les autres sur une surface de carte de circuits imprimés et/ou en tant que multitude de bobines individuelles disposées de manière à se chevaucher au moins en partie les unes les autres.

7. Dispositif selon l'une quelconque des revendications 4 à 6, **caractérisé en ce qu'**au moins un moyen de bobine de compensation (16) est disposé sur ou dans la carte de circuits imprimés (10).

8. Dispositif selon l'une quelconque des revendications 1 à 7, **caractérisé en ce que** l'au moins un moyen de bobine d'excitation (12) est réalisé en tant que bobine renfermant côté bord au moins par endroits les moyens de bobine de détection (14).

9. Dispositif selon l'une quelconque des revendications 1 à 8, **caractérisé en ce que** des moyens de génération de signaux d'excitation reliés par une technique de signalisation à l'au moins un moyen de bobine d'excitation (12) génèrent un signal d'excitation avec une ou plusieurs fréquences d'excitation et/ou un spectre de fréquences d'excitation dans la plage de fréquences de 1 kHz à 5 MHz.

10. Dispositif selon la revendication 9, **caractérisé en ce que** le signal d'excitation est généré avec une multitude de fréquences d'excitation espacées les unes des autres de manière spectrale et/ou dans une plage de fréquences d'excitation large de manière spectrale d'au moins 100 kHz.

11. Dispositif selon l'une quelconque des revendications 1 à 10, **caractérisé en ce que** l'au moins un moyen d'évaluation (25) est réalisé pour détecter et évaluer un signal de sortie des moyens de bobine de détection (14) de telle sorte que le signal de sortie est évalué de manière spectrale sur une plage de fréquences d'au moins 100 kHz et/ou pour une multitude de fréquences de support espacées les unes des autres de manière spectrale.

12. Dispositif selon l'une quelconque des revendications 1 à 11, **caractérisé en ce que** l'au moins un moyen d'analyse (25) est réalisé pour détecter et évaluer une fréquence et/ou des phases et/ou une amplitude d'un signal de sortie des moyens de bobine de détection (14).

13. Dispositif selon l'une quelconque des revendications 1 à 12, **caractérisé par** des moyens de compensation (16), qui sont réalisés pour compenser une influence électromagnétique du véhicule sur l'état de couplage entre l'au moins un moyen de bobine d'excitation (12) et l'au moins un moyen de bobine de détection (14).

14. Système de transmission d'énergie par induction, dans lequel le système comprend au moins une unité de bobine primaire (18) pour générer au moins une partie d'un champ de transmission de puissance électromagnétique et une unité de bobine secondaire (38) pour recevoir le champ électromagnétique généré par l'unité de bobine primaire, **caractérisé en ce que**
le système comprend un dispositif de détection d'un élément perturbateur selon l'une quelconque des revendications 1 à 13.

15. Procédé de détection d'au moins un élément perturbateur dans un système de transmission d'énergie par induction, dans lequel le système de transmission d'énergie par induction comprend au moins une unité de bobine primaire (18) pour générer au moins une partie d'un champ de transmission de puissance électromagnétique, dans lequel un champ d'excitation est généré par au moins un moyen de bobine d'excitation (12) d'un moyen détecteur d'élément perturbateur (48, 25, 50) et est reçu au moins en partie par au moins un moyen de bobine de détection (14) du moyen détecteur d'élément perturbateur (48, 25, 50), lequel est associé à l'au moins un moyen de bobine d'excitation (12), dans lequel un état de couplage entre l'au moins un moyen de bobine d'excitation (12) et l'au moins un moyen de bobine de détection (14) et/ou un changement de l'état de couplage est détecté, dans lequel l'élément perturbateur est détecté en fonction de l'état de couplage et/ou du changement de l'état de couplage, dans lequel une influence électromagnétique de l'unité de bobine primaire (18) et/ou d'une unité de bobine secondaire (38) sur l'état de couplage entre l'au moins un moyen de bobine d'excitation (12) et l'au moins un moyen de bobine de détection (14) est compensée par au moins un moyen de compensation (16), dans lequel l'au moins un moyen détecteur d'élément perturbateur (48, 25, 50) est réalisé de manière séparée de l'unité de bobine primaire (18), dans lequel la proportion du champ de transmission de puissance sur le champ reçu par l'au moins un moyen de bobine de détection (14) est réduite par le moyen de compensation (16) et/ou la proportion du signal de sortie, laquelle est générée par l'au moins un moyen de bobine de détection (16) en fonction du champ de transmission de puissance reçu, est réduite par le moyen de compensation (16),
**caractérisé en ce que**
l'au moins un moyen de compensation (16) comprend au moins un moyen de bobine de compensation, dans lequel un champ de compensation est généré par le moyen de bobine de compensation, dans lequel au moins une partie du champ de transmission de puissance reçu par l'au moins un moyen de détection (14) est compensée par le champ de compensation et/ou dans lequel au moins une partie du champ de transmission de puissance est détectée par le moyen de bobine de compensation.
